# EUROPEAN PATENT APPLICATION

(11) **EP 4 418 117 A1**
(43) Date of publication of application: **21.08.2024**
(21) Application number: 22897925.8
(22) Date of filing: 25.11.2022
(51) Int. Cl.: G06F 9/50

(54) **CONFIGURATION DEVICE, SCHEDULING DEVICE, CONFIGURATION METHOD, AND SCHEDULING METHOD**

(30) Priority: 29.11.2021 CN 202111434125
(71) Applicant: Huawei Technologies Co., Ltd., Shenzhen, Guangdong 518129 (CN)
(72) Inventor: XU, Xinyu, Shenzhen, Guangdong 518129 (CN); XU, Shifeng, Shenzhen, Guangdong 518129 (CN); WANG, Jun, Shenzhen, Guangdong 518129 (CN); FANG, Bo, Shenzhen, Guangdong 518129 (CN); GENG, Yuling, Shenzhen, Guangdong 518129 (CN)
(74) Representative: MERH-IP Matias Erny Reichl Hoffmann Patentanwälte PartG mbB
(86) International application number: PCT/CN2022/134315
(87) International publication number: WO 2023/093843

(57) **Abstract**

Embodiments of this application disclose a configuration apparatus, a scheduling apparatus, a configuration method, and a scheduling method, and relate to the computer field, so that computing power of a hardware resource can be flexibly divided, and a resource utilization rate is improved. A specific solution is: The configuration apparatus includes a processor and a transmission interface, where the processor is configured to: configure at least one virtual function VF; configure a resource pool corresponding to each VF and running time information of each VF, where the resource pool includes at least one hardware computing unit; and send configuration information through the transmission interface, where the configuration information indicates a resource pool corresponding to the at least one VF and running time information of the at least one VF.

## Description

This application claims priority to Chinese Patent Application No. 202111434125.1, filed with the China National Intellectual Property Administration on November 29, 2021 and entitled "CONFIGURATION APPARATUS, SCHEDULING APPARATUS, CONFIGURATION METHOD, AND SCHEDULING METHOD", which is incorporated herein by reference in its entirety.

### TECHNICAL FIELD

Embodiments of this application relate to the computer field, and in particular, to a configuration apparatus, a scheduling apparatus, a configuration method, and a scheduling method.

### BACKGROUND

Currently, in different application scenarios, different computing power is needed. For example, in an artificial intelligence (artificial intelligence, AI) scenario, massive computing power is generally needed, and in scenarios such as a mechanical arm and a robot, small computing power is needed. To improve a resource utilization rate of a computing device in different scenarios, computing power of the computing device may be divided and provided for different users for use.

One type of division technology is a time slice division technology. Running time is allocated to each virtual machine, and time-sliced scheduling is performed on the virtual machine based on the running time. However, during time slice division, the virtual machine completely occupies all computing resources of a physical graphics processing unit (graphics processing unit, GPU) within a running time period of the virtual machine. In this case, a virtual machine whose resource utilization rate does not reach 100% causes a low resource utilization rate of the computing device. In addition, because all the virtual machines share a same physical GPU in a time-sliced manner, resource isolation cannot be implemented well, and a high security risk exists.

Another type of division technology is a multi-instance graphics processing unit (multi-instance GPU, MIG) division technology. A physical GPU is divided into a plurality of instances in a resource isolation manner. Each instance has an independent cache acceleration resource and computing acceleration resource that are isolated, and the plurality of instances are separately provided for different virtual machines for use. However, after MIG division, a quantity of needed computing acceleration resources cannot be dynamically configured during running. When a computing resource in an instance is faulty, a computing resource in another instance cannot be used to implement quick recovery. In addition, configuration and scheduling are provided by different vendors. In this case, for a same physical GPU, the MIG division technology and the time slice division technology are mutually exclusive. Only one of the MIG division technology and the time slice division technology can be selected. Consequently, time-sliced scheduling cannot be flexibly performed after the MIG division, and the computing power cannot be flexibly overcommitted to a plurality of users for use.

### SUMMARY

Embodiments of this application provide a configuration apparatus, a scheduling apparatus, a configuration method, and a scheduling method, so that computing power of a hardware resource can be flexibly divided, and a resource utilization rate is improved.

To achieve the foregoing objectives, the following technical solutions are used in embodiments of this application.

According to a first aspect of embodiments of this application, a configuration apparatus is provided. The configuration apparatus includes a processor and a transmission interface. The processor is configured to: first, configure at least one virtual function VF; then, configure a resource pool corresponding to each VF and running time information of each VF, where the resource pool includes at least one hardware computing unit; and finally, send configuration information through the transmission interface, where the configuration information indicates a resource pool corresponding to the at least one VF and running time information of the at least one VF.

Optionally, the configuration apparatus may preconfigure the at least one VF, or may configure the at least one VF based on user request information.

Based on this solution, the running time information of the VF and the resource pool corresponding to the VF are flexibly configured by the configuration apparatus, so that dual configuration of time scheduling and physical correspondence can be implemented. Therefore, combination division based on time slice division and MIG division can be performed on an acceleration apparatus. Compared with a conventional technology in which configuration and scheduling are performed by different vendors, a software vendor does not know a specific architecture of a hardware resource provided by a hardware vendor, and the hardware vendor does not support the software vendor in performing flexible configuration, in this solution, the configuration apparatus can obtain a hardware resource division status of bottom-layer hardware, and a scheduling apparatus reserves a time scheduling interface for each hardware resource, so that the configuration apparatus can not only flexibly group correspondences between the hardware resources and the VFs, but also flexibly schedule the VFs in a time dimension. In this way, the dual configuration of time scheduling and physical correspondence can be implemented, so that the combination division based on time slice division and MIG division can be implemented on the hardware resource. In addition, because the configuration apparatus can flexibly configure the resource pool corresponding to the VF and the running time information of the VF, the configuration apparatus can flexibly divide computing power of the hardware resource in different service scenarios. This can effectively improve a resource utilization rate of the hardware resource. In this solution, an individual cloud user or a small enterprise customer can purchase resources and computing power on demand to deploy an AI application at a low cost.

In a possible implementation, the at least one hardware computing unit is obtained through physical division on an acceleration apparatus.

Based on this solution, each acceleration apparatus may be physically divided into a plurality of hardware computing units, and the plurality of hardware computing units support regrouping and time-sliced invoking. Therefore, the combination division based on time slice division and MIG division can be performed on the hardware resource, to improve the utilization rate of the hardware resource.

In a possible implementation, the acceleration apparatus includes at least one of an artificial intelligence AI processor, a graphics processing unit GPU, a central processing unit CPU, a joint photographic experts group encoder JPEGE, or a joint photographic experts group decoder JPEGD.

Based on this solution, the acceleration apparatus such as the AI processor, the GPU, the CPU, the JPEGE, or the JPEGD may be physically divided into a plurality of hardware computing units, and the plurality of hardware computing units obtained through division support regrouping and time-sliced invoking. Therefore, the combination division based on time slice division and MIG division can be performed on the hardware resource, to improve the utilization rate of the hardware resource.

In a possible implementation, the at least one hardware computing unit includes an artificial intelligence computing core AIC, a GPU core, a CPU core, a JPEGE processing unit, or a JPEGD processing unit.

Based on this solution, the acceleration apparatus may be physically divided into a plurality of hardware computing units, and the hardware computing unit may include the AIC, the GPU core, the CPU core, the JPEGE processing unit, or the JPEGD processing unit. The configuration apparatus may make at least one of the plurality of hardware computing units correspond to the resource pool, in other words, each resource pool may include at least one of the following hardware computing units: the AIC, the GPU core, the CPU core, the JPEGE processing unit, or the JPEGD processing unit. In other words, the configuration apparatus in this application may flexibly configure a computing resource of each resource pool based on the hardware computing unit obtained through division (where for example, the configuration apparatus may flexibly adjust a quantity of AI cores included in each resource pool).

In a possible implementation, the configuration information further indicates a correspondence between the resource pool and the hardware computing unit.

Optionally, different resource pools include different hardware computing units, and one hardware computing unit is not allocated to different resource pools.

Based on this solution, the configuration apparatus may flexibly configure the correspondence between the resource pool and the hardware computing unit. For example, in some examples, a resource pool 1 may correspond to a hardware computing unit 1 and a hardware computing unit 2, and in other examples, the resource pool 1 corresponds to the hardware computing unit 1 and a hardware computing unit 3. In other words, in different service scenarios, the hardware computing unit supports regrouping, so that the correspondence between the resource pool and the hardware computing unit may change dynamically. In this way, the configuration apparatus can flexibly configure a hardware computing unit in each resource pool in different service scenarios, and a utilization rate of the computing resource can be further improved.

In a possible implementation, one resource pool corresponds to one VF, and the VF independently occupies a hardware computing unit in the resource pool corresponding to the VF. Alternatively, one resource pool corresponds to a plurality of VFs, and the plurality of VFs occupy a hardware computing unit in the resource pool in a time-sliced manner based on running time information of each of the plurality of VFs.

Based on this solution, the correspondence between the resource pool and the VF is dynamically configured by the configuration apparatus. When one resource pool corresponds to one VF, running time information of the VF is invalid, and the VF independently occupies a hardware computing unit in the resource pool corresponding to the VF. In other words, MIG division can be performed on the acceleration apparatus. When one resource pool corresponds to a plurality of VFs, running time information of the plurality of VFs is valid, and the plurality of VFs may occupy a hardware computing unit in the resource pool in a time-sliced manner based on running time information of each VF. In other words, time slice division can be performed on the acceleration apparatus. Therefore, in this solution, the correspondence between the resource pool and the VF is configured by the configuration apparatus, so that computing power division can be flexibly performed, and the resource utilization rate can be effectively improved.

In a possible implementation, the processor is specifically configured to configure, based on user request information, the resource pool corresponding to each VF and the running time information of each VF. The user request information includes at least one of a type of the hardware computing unit, a quantity of hardware computing units, a quantity of users, or a resource scheduling manner.

Based on this solution, the processor may flexibly configure, based on the user request information, the resource pool corresponding to each VF and the running time information of each VF, so that in different service scenarios, the configuration apparatus can flexibly perform computing power division based on the user request information, to improve the utilization rate of the computing resource.

In a possible implementation, the processor is further specifically configured to configure, based on resource usage information, the resource pool corresponding to each VF and the running time information of each VF. The resource usage information includes at least one of a quantity of VFs or usage of the hardware computing unit in the resource pool.

Based on this solution, the processor may independently and flexibly configure, based on the resource usage information, the resource pool corresponding to each VF and the running time information of each VF, so that in different service scenarios, the configuration apparatus can flexibly perform computing power division based on resource usage, to improve the utilization rate of the computing resource.

According to a second aspect of embodiments of this application, a scheduling apparatus is provided. The scheduling apparatus includes a processor and a transmission interface. The processor is configured to: receive configuration information from a configuration apparatus through the transmission interface, where the configuration information indicates a resource pool corresponding to a virtual function VF and running time information of the VF, and the resource pool includes at least one hardware computing unit; and schedule, based on the configuration information, the hardware computing unit in the resource pool corresponding to the VF, to implement a function of the VF.

Based on this solution, the scheduling apparatus may schedule, based on the configuration information, the hardware computing unit in the resource pool corresponding to the VF, to implement the function of the VF. Because the configuration information indicates the running time information of the VF and the resource pool corresponding to the VF, dual configuration of time scheduling and physical correspondence can be implemented in this solution. Therefore, combination division based on time slice division and MIG division can be performed on an acceleration apparatus. In addition, because the configuration information is flexibly configured by the configuration apparatus, a correspondence between the VF and the resource pool may change dynamically. For example, in some examples, one VF may correspond to one resource pool, and in other examples, a plurality of VFs may correspond to one resource pool. Because the correspondence between the VF and the resource pool may change dynamically, in different service scenarios, the configuration apparatus can flexibly perform computing power division on a hardware resource in the acceleration apparatus. Therefore, the scheduling apparatus may schedule, based on dynamic configuration information, the hardware computing unit in the resource pool corresponding to the VF, to implement the function of the VF. This can effectively improve a resource utilization rate.

In a possible implementation, the at least one hardware computing unit is obtained through physical division on an acceleration apparatus.

Based on this solution, each acceleration apparatus may be physically divided into a plurality of hardware computing units, and the plurality of hardware computing units support regrouping and time-sliced invoking. Therefore, the combination division based on time slice division and MIG division can be performed on the hardware resource, to improve a utilization rate of the hardware resource.

In a possible implementation, the acceleration apparatus includes at least one of an artificial intelligence AI processor, a graphics processing unit GPU, a central processing unit CPU, a joint photographic experts group encoder JPEGE, or a joint photographic experts group decoder JPEGD.

Based on this solution, the acceleration apparatus includes at least one of the artificial intelligence AI processor, the graphics processing unit GPU, the central processing unit CPU, the joint photographic experts group encoder JPEGE, or the joint photographic experts group decoder JPEGD.

In a possible implementation, the at least one hardware computing unit includes an artificial intelligence computing core AIC, a GPU core, a CPU core, a JPEGE processing unit, or a JPEGD processing unit.

Based on this solution, the acceleration apparatus may be physically divided into a plurality of hardware computing units, and the hardware computing unit may include the AIC, the GPU core, the CPU core, the JPEGE processing unit, or the JPEGD processing unit. The configuration apparatus may make at least one of the plurality of hardware computing units correspond to the resource pool, in other words, each resource pool may include at least one of the following hardware computing units: the AIC, the GPU core, the CPU core, the JPEGE processing unit, or the JPEGD processing unit. In other words, the configuration apparatus in this application may flexibly configure a computing resource of each resource pool based on the hardware computing unit obtained through division (where for example, the configuration apparatus may flexibly adjust a quantity of AI cores included in each resource pool). Therefore, the scheduling apparatus can implement the function of the VF by scheduling the hardware computing unit in the resource pool corresponding to the VF. This can effectively improve the resource utilization rate.

In a possible implementation, the processor is further configured to make a route identifier of the VF correspond to a route identifier of the resource pool.

Based on this solution, the scheduling apparatus may make the route identifier of the VF correspond to the route identifier of the resource pool. Therefore, when the configuration information changes, for example, when the resource pool corresponding to the VF changes, correspondingly, the scheduling apparatus may make the route identifier of the VF correspond to the route identifier of the resource pool. Then, the scheduling apparatus schedules the hardware computing unit in the resource pool corresponding to the VF, to implement the function of the VF. In other words, in this solution, the scheduling apparatus regroup the route identifier of the VF and the route identifier of the resource pool to flexibly regroup the VF and the hardware resource. Optionally, the scheduling apparatus may make a sequence number of the VF correspond to a sequence number of the resource pool by using a selector, to flexibly regroup the VF and the resource pool.

In a possible implementation, the processor is further configured to make, based on the correspondence that is between the VF and the resource pool and that is in the configuration information, the route identifier of the VF correspond to the route identifier of the resource pool.

Based on this solution, when the configuration information changes, for example, when the resource pool corresponding to the VF changes, the scheduling apparatus may make, based on the correspondence between the VF and the resource pool, the route identifier of the VF correspond to the route identifier of the resource pool. Then, the scheduling apparatus schedules the hardware computing unit in the resource pool corresponding to the VF, to implement the function of the VF. In other words, in this solution, the scheduling apparatus may flexibly regroup the route identifier of the VF and the route identifier of the resource pool based on the resource pool corresponding to the VF.

In a possible implementation, the configuration information further indicates a correspondence between the resource pool and the hardware computing unit.

Optionally, different resource pools include different hardware computing units, and one hardware computing unit is not allocated to different resource pools.

Based on this solution, the configuration apparatus may dynamically determine the correspondence between the resource pool and the hardware computing unit. For example, in some examples, a resource pool 1 may correspond to a hardware computing unit 1 and a hardware computing unit 2, and in other examples, the resource pool 1 corresponds to the hardware computing unit 1 and a hardware computing unit 3. In other words, in different service scenarios, the correspondence between the resource pool and the hardware computing unit may change dynamically. In this way, the configuration apparatus can flexibly configure a hardware computing unit in each resource pool in different service scenarios, and a utilization rate of the computing resource can be further improved.

In a possible implementation, the processor is further configured to make the route identifier of the resource pool correspond to a route identifier of the hardware computing unit.

Based on this solution, the scheduling apparatus may make the route identifier of the resource pool correspond to the route identifier of the hardware computing unit. Therefore, when the configuration information changes, for example, when the correspondence between the resource pool and the hardware computing unit changes, correspondingly, the scheduling apparatus may make the route identifier of the resource pool correspond to the route identifier of the hardware computing unit. Then, the scheduling apparatus schedules the hardware computing unit in the resource pool corresponding to the VF, to implement the function of the VF. In other words, in this solution, the scheduling apparatus regroup the route identifier of the resource pool and the route identifier of the hardware computing unit to flexibly regroup the resource pool and the hardware computing unit.

In a possible implementation, the processor is further configured to make, based on the correspondence that is between the resource pool and the hardware computing unit and that is in the configuration information, the route identifier of the resource pool correspond to the route identifier of the hardware computing unit.

Based on this solution, when the configuration information changes, for example, when the correspondence between the resource pool and the hardware computing unit changes, the scheduling apparatus may make, based on the correspondence between the resource pool and the hardware computing unit, the route identifier of the resource pool correspond to the route identifier of the hardware computing unit. Then, the scheduling apparatus schedules the hardware computing unit in the resource pool corresponding to the VF, to implement the function of the VF. In other words, in this solution, the scheduling apparatus may flexibly regroup the route identifier of the resource pool and the route identifier of the hardware computing unit based on the correspondence between the resource pool and the hardware computing unit.

In a possible implementation, the scheduling apparatus further includes a cache, and the cache is configured to store running time information corresponding to each of the at least one VF.

Based on this solution, the scheduling apparatus may configure, for each VF, a cache space used to store the running time information, so that the scheduling apparatus can receive a configuration of the configuration apparatus in a time dimension, and can implement time-sliced scheduling by using the running time information of the VF stored in the cache.

In a possible implementation, one resource pool corresponds to one VF, and the VF independently occupies a hardware computing unit in the resource pool corresponding to the VF. Alternatively, one resource pool corresponds to a plurality of VFs, and the plurality of VFs occupy a hardware computing unit in the resource pool in a time-sliced manner based on running time information of each of the plurality of VFs.

Based on this solution, the correspondence between the resource pool and the VF is dynamically configured by the configuration apparatus. When one resource pool corresponds to one VF, running time information of the VF is invalid, and the VF independently occupies a hardware computing unit in the resource pool corresponding to the VF. In other words, MIG division can be performed on the acceleration apparatus. When one resource pool corresponds to a plurality of VFs, running time information of the plurality of VFs is valid, and the plurality of VFs may occupy a hardware computing unit in the resource pool in a time-sliced manner based on running time information of each VF. In other words, time slice division can be performed on the acceleration apparatus. Therefore, in this solution, the correspondence between the resource pool and the VF is configured by the configuration apparatus, so that computing power division can be flexibly performed, and the resource utilization rate can be effectively improved.

In a possible implementation, at least one virtual machine runs on a server, and the at least one virtual machine includes a first virtual machine. The processor is specifically configured to receive a first task of the first virtual machine through the transmission interface, determine a first VF corresponding to the first task, and schedule, based on the configuration information, a hardware computing unit in a first resource pool corresponding to the first VF, to implement a function of the first VF.

Based on this solution, after receiving a task of a virtual machine, the scheduling apparatus may determine a VF corresponding to the task, and may determine, based on the configuration information, a resource pool corresponding to the VF, so that the scheduling apparatus can schedule a hardware computing unit in the resource pool to implement a function of the VF. Because the configuration information may dynamically change in different service scenarios, when the scheduling apparatus schedules the hardware computing unit in the resource pool based on the dynamic configuration information, the resource utilization rate of the hardware resource can be improved.

In a possible implementation, the first resource pool corresponds to a plurality of VFs, and the plurality of VFs include the first VF and a second VF. The processor is further specifically configured to: based on running time information of the first VF and running time information of the second VF, send a task of the first VF to the first resource pool through the transmission interface within a running time period of the first VF, and send a task of the second VF to the first resource pool through the transmission interface within a running time period of the second VF.

Based on this solution, when one resource pool corresponds to a plurality of VFs, strictly based on the running time information of the first VF and the running time information of the second VF, the scheduling apparatus may schedule the task of the first VF within the running time period of the first VF, and schedule the task of the second VF within the running time period of the second VF. In other words, in this solution, the scheduling apparatus may schedule a task of each VF strictly based on running time information of each of the plurality of VFs. Within a running time period of one VF, even if the VF currently has no task, time of the running time period of the VF is occupied. The scheduling manner in this solution may be referred to as strict scheduling.

In a possible implementation, before the running time period of the first VF ends, if the first VF currently has no task, the processor is further specifically configured to send the task of the second VF to the first resource pool.

Based on this solution, when one resource pool corresponds to a plurality of VFs, the scheduling apparatus may schedule, based on the running time information of the first VF and the running time information of the second VF, the task of each VF. Before the running time period of the first VF ends, if the first VF has no task, the scheduling apparatus may send the task of the second VF to the first resource pool. In other words, in this solution, before a running time period of one VF ends, if the VF currently has no task, another VF may occupy time of the running time period of the VF. The scheduling manner in this solution may be referred to as elastic scheduling.

In a possible implementation, the processor is further configured to correspondingly increase time of the running time period of the first VF when the task of the first VF is scheduled next time.

Based on this solution, before the running time period of the first VF ends, the scheduling apparatus sends the task of the second VF to the first resource pool, in other words, the task of the second VF occupies the time of the running time period of the first VF. Therefore, when scheduling the task of the first VF next time, the scheduling apparatus needs to supplement the time that is of the running time period of the first VF and that is occupied by the task of the second VF. Therefore, the scheduling apparatus correspondingly increases the time of the running time period of the first VF when scheduling the task of the first VF next time.

In a possible implementation, the processor is further configured to release the time of the running time period of the first VF or return the time of the running time period of the first VF to zero when time obtained by increasing the time of the running time period of the first VF exceeds first preset duration.

Based on this solution, if the task of the second VF keeps occupying the time of the running time period of the first VF, the time of the running time period of the first VF keeps increasing. If the time obtained by increasing the time of the running time period of the first VF exceeds the first preset duration, the scheduling apparatus may release the time of the running time period of the first VF or return the time of the running time period of the first VF to zero.

In a possible implementation, the processor is further configured to send a first instruction to the first resource pool through the transmission interface when the running time period of the first VF ends, where the first instruction is used to instruct the first resource pool to stop executing the task of the first VF when the task of the first VF is not completely executed and save a context for executing the task of the first VF.

Based on this solution, the scheduling apparatus may schedule a task of a VF strictly based on end time of the running time period of each VF. In other words, when the running time period of the first VF ends, even if the task of the first VF is not completely executed, the scheduling apparatus indicates the first resource pool to stop executing the task of the first VF, and saves the context for executing the task of the first VF. When the scheduling apparatus schedules the first VF next time, the hardware computing unit in the first resource pool may continue to execute the task of the first VF based on the saved context of the task of the first VF. The scheduling manner in this solution may be referred to as scheduling based on end time of a running time period.

In a possible implementation, the processor is further configured to send a second instruction to the first resource pool through the transmission interface when the running time period of the first VF ends, where the second instruction is used to instruct the first resource pool to continue to execute the task of the first VF when the task of the first VF is not completely executed. The processor is further configured to correspondingly reduce the time of the running time period of the first VF when the task of the first VF is scheduled next time.

Based on this solution, when the running time period of the first VF ends, if the task of the first VF is not completely executed, the scheduling apparatus may indicate the first resource pool to continue to execute the task of the first VF. Because the task of the first VF is not completely executed within the running time period of the first VF, the task of the first VF occupies the time of the running time period of the second VF. Therefore, when scheduling the task of the first VF next time, the scheduling apparatus needs to return the time that is of the running time period of the second VF and that is occupied by the task of the first VF. Therefore, the scheduling apparatus correspondingly reduces the time of the running time period of the first VF when scheduling the task of the first VF next time. The scheduling manner in this solution may be referred to as scheduling based on running end time of a task.

In a possible implementation, the processor is further configured to send a third instruction to the first resource pool through the transmission interface when execution time of the task of the first VF exceeds duration of the running time period of the first VF and reaches second preset duration, and the task of the first VF is still not completely executed, where the third instruction is used to instruct the first resource pool to stop executing the task of the first VF.

Based on this solution, when the execution time of the task of the first VF exceeds the time of the running time period of the first VF and reaches the second preset duration, if the task of the first VF is still not completely executed, the task of the first VF may be faulty. In this case, the scheduling apparatus may indicate the first resource pool to forcibly stop executing the task of the first VF, to avoid a problem that the first VF occupies the first resource pool for a long period of time and wastes resources because a fault occurs in an execution process of the task of the first VF.

According to a third aspect of embodiments of this application, a configuration method is provided. The configuration method includes: A configuration apparatus configures at least one virtual function VF, and configures a resource pool corresponding to each VF and running time information of each VF, where each resource pool includes at least one hardware computing unit. The configuration apparatus sends configuration information to a scheduling apparatus, where the configuration information indicates a resource pool corresponding to the at least one VF and running time information of the at least one VF.

In a possible implementation, the at least one hardware computing unit is obtained through physical division on an acceleration apparatus.

In a possible implementation, the acceleration apparatus includes at least one of an artificial intelligence AI processor, a graphics processing unit GPU, a central processing unit CPU, a joint photographic experts group encoder JPEGE, or a joint photographic experts group decoder JPEGD.

In a possible implementation, the at least one hardware computing unit includes at least one of an artificial intelligence computing core AIC, a GPU core, a CPU core, a JPEGE processing unit, or a JPEGD processing unit.

In a possible implementation, the configuration information further indicates a correspondence between the resource pool and the hardware computing unit.

In a possible implementation, one resource pool corresponds to one VF, and the VF independently occupies a hardware computing unit in the resource pool corresponding to the VF. Alternatively, one resource pool corresponds to a plurality of VFs, and the plurality of VFs occupy a hardware computing unit in the resource pool in a time-sliced manner based on running time information of each VF.

In a possible implementation, that the configuration apparatus configures a resource pool corresponding to each VF and running time information of each VF includes: The configuration apparatus configures, based on user request information, the resource pool corresponding to each VF and the running time information of each VF. The user request information includes at least one of a type of the hardware computing unit, a quantity of hardware computing units, a quantity of users, or a resource scheduling manner.

In a possible implementation, that the configuration apparatus configures a resource pool corresponding to each VF and running time information of each VF further includes: The configuration apparatus configures, based on resource usage information, the resource pool corresponding to each VF and the running time information of each VF. The resource usage information includes at least one of a quantity of VFs or usage of the hardware computing unit in the resource pool.

According to a fourth aspect of embodiments of this application, a scheduling method is provided. The method includes: A scheduling apparatus receives configuration information from a configuration apparatus. The configuration information indicates a resource pool corresponding to a virtual function VF and running time information of the VF, and each resource pool includes at least one hardware computing unit. The scheduling apparatus schedules, based on the configuration information, the hardware computing unit in the resource pool corresponding to the VF, to implement a function of the VF.

In a possible implementation, the at least one hardware computing unit is obtained through physical division on an acceleration apparatus.

In a possible implementation, the acceleration apparatus includes at least one of an artificial intelligence AI processor, a graphics processing unit GPU, a central processing unit CPU, a joint photographic experts group encoder JPEGE, or a joint photographic experts group decoder JPEGD.

In a possible implementation, the at least one hardware computing unit includes at least one of an artificial intelligence computing core AIC, a GPU core, a CPU core, a JPEGE processing unit, or a JPEGD processing unit.

In a possible implementation, the method further includes: The scheduling apparatus makes a route identifier of the VF correspond to a route identifier of the resource pool.

In a possible implementation, the configuration information further indicates a correspondence between the resource pool and the hardware computing unit.

In a possible implementation, the method further includes: The scheduling apparatus makes the route identifier of the resource pool correspond to a route identifier of the hardware computing unit.

In a possible implementation, the scheduling apparatus includes a cache, and the cache is configured to store running time information corresponding to each of the at least one VF.

In a possible implementation, one resource pool corresponds to one VF, and the VF independently occupies a hardware computing unit in the resource pool corresponding to the VF. Alternatively, one resource pool corresponds to a plurality of VFs, and the plurality of VFs occupy a hardware computing unit in the resource pool in a time-sliced manner based on running time information of each VF.

In a possible implementation, at least one virtual machine runs on a server, and the at least one virtual machine includes a first virtual machine. The method further includes: The scheduling apparatus receives a first task of the first virtual machine, and determines a first VF corresponding to the first task.

In a possible implementation, a first resource pool corresponds to a plurality of VFs, the plurality of VFs include the first VF and a second VF, and that the scheduling apparatus schedules, based on the configuration information, the hardware computing unit in the resource pool corresponding to the VF, to implement a function of the VF includes: Based on running time information of the first VF and running time information of the second VF, the scheduling apparatus sends a task of the first VF to the first resource pool within a running time period of the first VF, and sends a task of the second VF to the first resource pool within a running time period of the second VF.

In a possible implementation, that the scheduling apparatus schedules, based on the configuration information, the hardware computing unit in the resource pool corresponding to the VF, to implement a function of the VF further includes: Before the running time period of the first VF ends, if the first VF currently has no task, the scheduling apparatus sends the task of the second VF to the first resource pool.

In a possible implementation, the method further includes: The scheduling apparatus correspondingly increases time of the running time period of the first VF when scheduling the task of the first VF next time.

In a possible implementation, the method further includes: The scheduling apparatus releases the time of the running time period of the first VF or returns the time of the running time period of the first VF to zero when time obtained by increasing the time of the running time period of the first VF exceeds first preset duration.

In a possible implementation, that the scheduling apparatus schedules, based on the configuration information, the hardware computing unit in the resource pool corresponding to the VF, to implement a function of the VF further includes: The scheduling apparatus sends a first instruction to the first resource pool when the running time period of the first VF ends, where the first instruction is used to instruct the first resource pool to stop executing the task of the first VF when the task of the first VF is not completely executed and save a context for executing the task of the first VF.

In a possible implementation, that the scheduling apparatus schedules, based on the configuration information, the hardware computing unit in the resource pool corresponding to the VF, to implement a function of the VF further includes: The scheduling apparatus sends a second instruction to the first resource pool when the running time period of the first VF ends, where the second instruction is used to instruct the first resource pool to continue to execute the task of the first VF when the task of the first VF is not completely executed.

In a possible implementation, the method further includes: The scheduling apparatus correspondingly reduces the time of the running time period of the first VF when scheduling the task of the first VF next time.

In a possible implementation, the method further includes: The scheduling apparatus sends a third instruction to the first resource pool when execution time of the task of the first VF exceeds duration of the running time period of the first VF and reaches second preset duration and the task of the first VF is still not completely executed, where the third instruction is used to instruct the first resource pool to stop executing the task of the first VF.

For descriptions of effects of the third aspect, refer to the descriptions of the effects of the first aspect. For descriptions of effects of the fourth aspect, refer to the descriptions of the effects of the second aspect. Details are not described herein again.

A fifth aspect of embodiments of this application provides a computer-readable storage medium. The computer-readable storage medium has computer program code, and when the computer program code is run on a processor, the processor is enabled to perform the configuration method according to the third aspect, or perform the scheduling method according to the fourth aspect.

A sixth aspect of embodiments of this application provides a computer program product. The computer program product includes program instructions, and when the program instructions are executed, the configuration method according to the third aspect or the scheduling method according to the fourth aspect is implemented.

A seventh aspect of embodiments of this application provides a computing system. The computing system includes a configuration apparatus and a scheduling apparatus. The configuration apparatus is configured to: configure at least one virtual function VF, and configure a resource pool corresponding to each VF and running time information of each VF, where the resource pool includes at least one hardware computing unit; and send configuration information to the scheduling apparatus, where the configuration information indicates a resource pool corresponding to the at least one VF and running time information of the at least one VF. The scheduling apparatus is configured to schedule, based on the configuration information, the hardware computing unit in the resource pool corresponding to the VF, to implement a function of the VF.

### BRIEF DESCRIPTION OF DRAWINGS

FIG. 1 is a schematic diagram of a structure of a computing device that uses a time slice division technology according to an embodiment of this application;
FIG. 2 is a schematic diagram of a structure of a computing device that uses a MIG division technology according to an embodiment of this application;
FIG. 3 is a schematic diagram of a structure of a configuration apparatus according to an embodiment of this application;
FIG. 4 is a schematic diagram of a structure of a server according to an embodiment of this application;
FIG. 5 is a schematic diagram of a structure of another server according to an embodiment of this application;
FIG. 6 is a schematic diagram of a structure of still another server according to an embodiment of this application;
FIG. 7 is a schematic flowchart of a configuration method according to an embodiment of this application; and
FIG. 8 is a schematic flowchart of a scheduling method according to an embodiment of this application.

### DESCRIPTION OF EMBODIMENTS

The following describes technical solutions in embodiments of this application with reference to accompanying drawings in embodiments of this application. In this application, "at least one" refers to one or more, and "a plurality of" refers to two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may represent a, b, c, a and b, a and c, b and c, or a and b and c, where a, b, and c may be singular or plural. In addition, to facilitate clear descriptions of technical solutions of embodiments of this application, in embodiments of this application, words such as "first" and "second" are used to distinguish same or similar items whose functions and purposes are substantially the same, and a person skilled in the art may understand that the words such as "first" and "second" do not limit a quantity or an execution order. For example, "first" in a first virtual function (virtual function, VF) and "second" in a second VF in embodiments of this application are merely used to distinguish between different VFs. The first, the second, and the like in embodiments of this application are merely described as examples and used to distinguish between described objects, which do not indicate an order, nor indicate a particular limitation on a quantity of devices in embodiments of this application, and shall not constitute any limitation on embodiments of this application.

Notably, in this application, a word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

First, some terms in embodiments of this application are explained and described.

A virtual machine is software implementation of a computer that can run a program like a real machine. One physical machine may be virtualized into a plurality of virtual machines based on application requirements. The plurality of virtual machines may have different operating systems. In this way, a plurality of operating systems can be run on one physical machine at the same time. For each operating system, a user can perform virtual partition and configuration. The virtual machine is a software computer, and is similar to a physical machine that runs an operating system and an application. A plurality of virtual machines can run synchronously on a same host system.

A virtual function (VF) is a "network interface card" or an instance obtained by virtualizing a physical network interface card that supports single-root I/O virtualization (single root I/O virtualization, SR-IOV). The VF is presented as an independent network interface card. Each VF has an exclusive peripheral component interconnect (peripheral component interconnect, PCI) configuration area, and may share a same physical resource (for example, share a same physical network port) with another VF. The VF may share one or more physical resources with another VF associated with the same physical function as the VF. The VF is a virtual device, and may be carried on a hardware entity or on virtual software.

A virtual machine monitor (Hypervisor) is software, firmware, or hardware that creates and runs the virtual machine. A computer used by the hypervisor to run one or more virtual machines is referred to as a host machine, and the virtual machines are referred to as guest machines.

Computing power overcommitment computing resources having same computing power are divided by using time slices, to be provided for a plurality of users for use, so that overcommitment of the computing power is implemented.

Currently, for different application scenarios, a computing power requirement of the user is different. To improve a hardware resource utilization rate, computing power of a computing device may be divided. The following separately describes in detail a time slice division technology and a multi-instance graphics processing unit (multi-instance GPU, MIG) division technology.

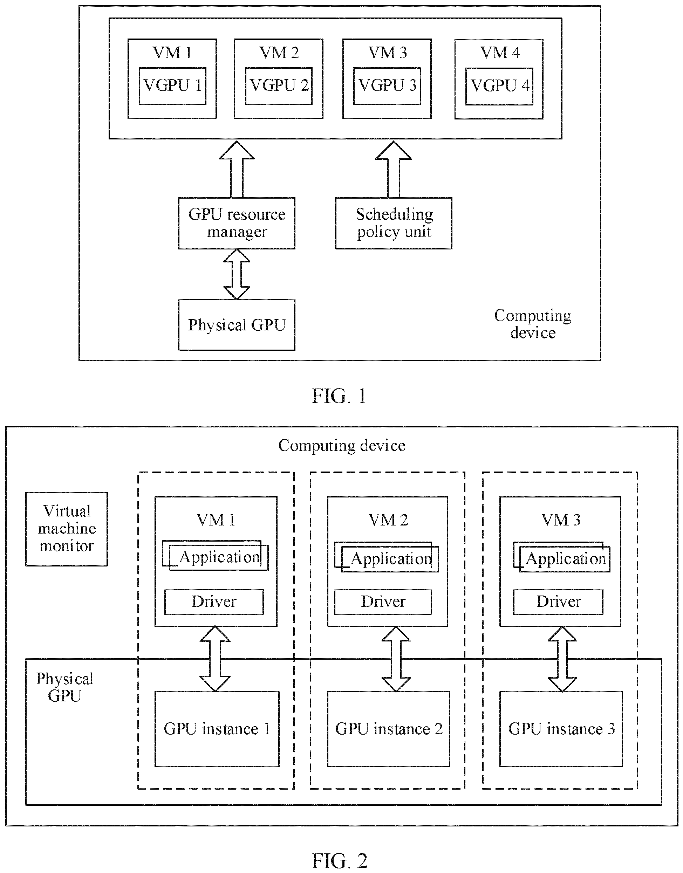

FIG. 1 is a schematic diagram of a structure of a computing device. The computing device uses a time slice division technology. As shown in FIG. 1, four virtual machines (virtual machines, VMs) run on the computing device: a VM 1 to a VM 4. A resource of one physical GPU may be divided into four virtual shards, and each shard of the GPU is referred to as one virtual GPU (VGPU for short). Each VGPU is a part of a VM and provides, for a user, a computing resource for implementing GPU computing on the virtual machine. A GPU resource manager in FIG. 1 is configured to allocate a running time period to each virtual machine, and a scheduling policy unit performs time-sliced scheduling on the virtual GPU based on the running time period. When the computing device uses the time slice division technology, within the running time period of each virtual GPU, all computing resources of the physical GPU serve the virtual GPU.

In the solution shown in FIG. 1, each virtual machine completely occupies all the computing resources of the physical GPU within the running time period of the virtual machine. In this case, a virtual machine whose resource utilization rate does not reach 100% causes a low resource utilization rate of the computing device. In addition, because all the virtual machines share a same physical GPU in a time-sliced manner, resource isolation cannot be implemented well, and a high security risk exists.

FIG. 2 is a schematic diagram of a structure of another computing device. The computing device uses a MIG division technology. As shown in FIG. 2, a physical GPU is divided into three instances in a resource isolation manner: a GPU instance 1 to a GPU instance 3 in FIG. 2. Each instance has a cache and a computing acceleration resource that are independently isolated. In addition, the GPU instance 1 to the GPU instance 3 are separately used by a virtual machine VM 1 to a virtual machine VM 3. A virtual machine monitor (Hypervisor) in FIG. 2 is software, firmware, or hardware that creates and runs a virtual machine.

However, in a solution shown in FIG. 2, static strict configuration division of a single physical GPU resource is implemented based on MIG division. In this case, a quantity of computing acceleration resources needed by each virtual machine cannot be dynamically configured during running. When a computing resource in one instance is faulty, a computing resource in another instance cannot be utilized for rapid recovery.

In addition, in a conventional technology, because configuration and scheduling are performed by different vendors, a software vendor does not know a specific architecture of a hardware resource provided by a hardware vendor, and the hardware vendor does not support flexible configuration performed by the software vendor. During time slice division, the software vendor may invoke the hardware resource in a time-sliced manner, but cannot divide and flexibly regroup the hardware resource. During MIG division, the hardware vendor that performs hardware resource division does not disclose specific situation of the hardware resource division or accept flexible scheduling of time by the software vendor. Instead, the hardware vendor provides a fixed hardware resource invoking solution. In this case, the conventional technology cannot support a combination division manner based on time slice division and MIG division. In other words, for a same physical GPU, the MIG division technology and the time slice division technology are mutually exclusive, and only one division technology can be selected. In this case, time-sliced scheduling cannot be supported after the MIG division, computing power cannot be overcommitted to a plurality of users, and complex user requirements cannot be met.

To resolve the foregoing technical problem, embodiments of this application provide a configuration apparatus. The configuration apparatus may flexibly configure running time information corresponding to a VF and a resource pool corresponding to the VF. In other words, the configuration apparatus can not only flexibly group a correspondence between a hardware resource and the VF, but also flexibly schedule the VF in a time dimension. In this way, dual configuration of time scheduling and physical correspondence can be implemented. Therefore, the combination division based on time slice division and MIG division can be performed on the hardware resource. In addition, because the configuration apparatus can flexibly configure the resource pool corresponding to the VF and the running time information of the VF, the configuration apparatus can flexibly divide computing power of the hardware resource in different service scenarios. This can effectively improve a resource utilization rate of the hardware resource.

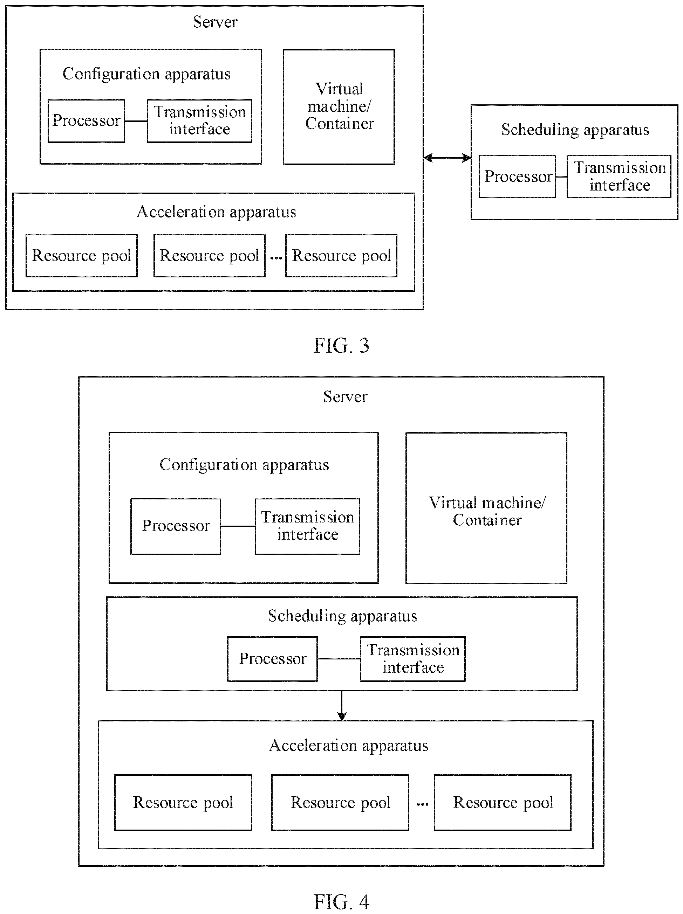

An embodiment of this application provides a configuration apparatus. As shown in FIG. 3, the configuration apparatus includes a processor and a transmission interface. The processor is configured to: configure at least one virtual function VF; configure a resource pool corresponding to each VF and running time information of each VF; and send configuration information to a scheduling apparatus through the transmission interface, where the configuration information indicates a resource pool corresponding to the at least one VF and running time information of the at least one VF.

As shown in FIG. 3, the configuration apparatus may be used in a server, and at least one virtual machine or container may run on the server. The following embodiment uses an example in which at least one virtual machine runs on the server to describe a solution in this embodiment of this application. In a cloud scenario, the configuration apparatus in this embodiment of this application may be disposed on a cloud server. A function of the configuration apparatus may be implemented by a virtual machine monitor (Hypervisor).

The configuration apparatus and the scheduling apparatus in this embodiment of this application may be separately disposed, or may be integrated together. For example, as shown in FIG. 3, the configuration apparatus and the scheduling apparatus may be separately disposed, and the scheduling apparatus may be inserted into a card slot of the server. For example, the scheduling apparatus may communicate with the server through a high-speed serial computer extended bus (peripheral component interconnect express, PCIE), a universal serial bus (universal serial bus, USB), or an Ethernet. A specific communication manner between the scheduling apparatus and the server is not limited in this embodiment of this application. For another example, as shown in FIG. 4, a configuration apparatus and a scheduling apparatus may alternatively be integrated together, and both are deployed on a server. The following embodiment uses an example in which the server includes the configuration apparatus and the scheduling apparatus to describe a solution provided in this embodiment of this application in detail.

When configuring at least one VF, the configuration apparatus may preconfigure the at least one VF, or may configure the at least one VF based on user request information. A specific implementation in which the configuration apparatus configures the at least one VF and a specific quantity of configured VFs are not limited in this embodiment of this application.

When the configuration apparatus configures a resource pool corresponding to a VF, one resource pool may correspond to one VF, or may correspond to a plurality of VFs. When one resource pool corresponds to one VF, the VF independently occupies a hardware computing unit in the resource pool corresponding to the VF. In other words, when one resource pool corresponds to one VF, running time information corresponding to the VF is invalid, and MIG division may be performed on a hardware resource. When one resource pool corresponds to a plurality of VFs, the plurality of VFs occupy a hardware computing unit in the resource pool in a time-sliced manner based on running time information of each VF. In other words, when one resource pool corresponds to the plurality of VFs, the running time information corresponding to each VF is valid, and time slice division may be performed on a hardware resource.

When configuring resource pools corresponding to the VFs, the configuration apparatus may configure that each resource pool in some resource pools corresponds to a plurality of VFs, each resource pool in the other resource pools corresponds to one VF, and different resource pools correspond to different VFs. Therefore, not only MIG division may be performed on the hardware resource, but also time slice division may be performed on the hardware resource, so that a combination division manner based on MIG division and time slice division can be implemented.

For example, in some scenarios in which a requirement for computing power is not high, if a user does not need to occupy an entire AI computing card, the configuration apparatus may configure one VF for the user, and configure that the VF corresponds to a hardware computing unit (for example, one AIC) of one slice, so that the VF can independently occupy the AIC. In a teaching scenario or another scenario, if a plurality of users need to share a hardware resource in one resource pool, the configuration apparatus may configure one VF for each user, and VFs of the plurality of users correspond to the one resource pool, so that the plurality of users can occupy the hardware resource in the resource pool in a time-sliced manner.

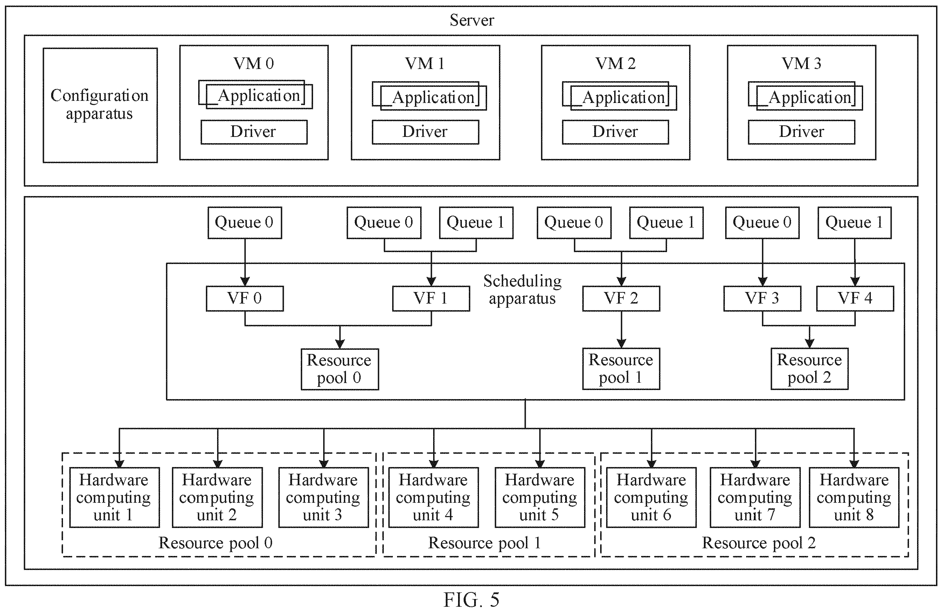

For example, as shown in FIG. 5, a configuration apparatus may configure that both a VF 0 and a VF 1 correspond to a resource pool 0, configure running time information of the VF 0 to 10 ms, and configure running time information of the VF 1 to 5 ms. In this way, the VF 0 and the VF 1 occupy a hardware computing unit in the resource pool 0 in a time-sliced manner. Within a running time period (10 ms) of the VF 0, the VF 0 occupies a physical resource in the resource pool 0, and within a running time period (5 ms) of the VF 1, the VF 1 occupies the physical resource in the resource pool 0.

For another example, as shown in FIG. 5, the configuration apparatus may configure that both a VF 3 and a VF 4 correspond to a resource pool 2, and configure running time information of the VF 3 and the VF 4. In this way, the VF 3 and the VF 4 occupy a hardware computing unit in the resource pool 2 in a time-sliced manner. Within a running time period of the VF 3, the VF 3 occupies a physical resource in the resource pool 2, and within a running time period of the VF 4, the VF 4 occupies the physical resource in the resource pool 2.

For still another example, as shown in FIG. 5, the configuration apparatus may configure that a VF 2 corresponds to a resource pool 1, and configure running time information of the VF 2 to 10 ms. In this way, the VF 2 may independently occupy a physical resource in the resource pool 1. In other words, when one resource pool corresponds to one VF, running time information corresponding to the VF is invalid.

The configuration apparatus may configure a resource pool corresponding to each VF and running time information of each VF. In other words, the configuration apparatus can not only flexibly group a correspondence between a hardware resource and the VF, but also flexibly schedule the VF in a time dimension. In this way, dual configuration of time scheduling and physical correspondence can be implemented. Therefore, combination division based on time slice division and MIG division can be performed on the hardware resource. The running time information of each VF may be a period of running time configured by the configuration apparatus for the VF.

Each of the foregoing resource pools may include at least one hardware computing unit. The at least one hardware computing unit is obtained through physical division on an acceleration apparatus. In other words, the acceleration apparatus may be physically divided into a plurality of hardware computing units. The acceleration apparatus includes but is not limited to at least one of the following acceleration apparatuses: an artificial intelligence AI processor, a graphics processing unit GPU, a central processing unit (central processing unit, CPU), a joint graphic experts group encoder (joint photographic experts group encoder, JPEGE), a joint photographic experts group decoder (joint photographic experts group decoder, JPEGD), or the like. The at least one hardware computing unit included in the resource pool includes but is not limited to at least one of the following hardware computing units: an artificial intelligence computing core (AI core, AIC), a GPU core, a CPU core, a JPEGE processing unit, a JPEGD processing unit, or the like.

For example, the acceleration apparatus includes the AI processor, the AIC, the GPU, the JPEGE, and the JPEGD. The AI processor may be physically divided into a plurality of AICs, the CPU may be physically divided into at least a plurality of CPU cores, the GPU may be physically divided into a plurality of GPU cores, the JPEGE may be physically divided into a plurality of JPEGE processing units, and the JPEGD may be physically divided into a plurality of JPEGD processing units. A type and a quantity of the acceleration apparatus are not limited in this embodiment of this application.

The acceleration apparatus may be configured to assist a computing apparatus in a server in completing a computing task. For example, if the computing apparatus in the server has insufficient computing power when executing the computing task, the hardware computing unit in the acceleration apparatus may assist the computing apparatus in executing the computing task. The acceleration apparatus and the configuration apparatus may be deployed on the server together, or the acceleration apparatus may be inserted into a card slot of the server in a card insertion manner. A specific deployment manner of the acceleration apparatus is not limited in this embodiment of this application. In FIG. 3 to FIG. 6, an example in which the acceleration apparatus is deployed on the server is used for description.

The configuration apparatus is further configured to configure a correspondence between the resource pool and the hardware computing unit. Configuration information further indicates the correspondence between the resource pool and the hardware computing unit. A type and a quantity of the hardware computing unit included in each resource pool are not limited in this embodiment of this application.

When the configuration apparatus configures the correspondence between the resource pool and the hardware computing unit, different resource pools may include different hardware computing units, and a same hardware computing unit is not allocated to different resource pools. In other words, physical resources that are of different resource pools and that are configured by the configuration apparatus are isolated from each other.

For example, as shown in FIG. 5, a computing device includes eight hardware computing units. The configuration apparatus in FIG. 5 may configure a hardware computing unit 1 to a hardware computing unit 3 as the resource pool 0, configure a hardware computing unit 4 and a hardware computing unit 5 as the resource pool 1, and configure a hardware computing unit 6 to a hardware computing unit 8 as the resource pool 2. It is clear that the resource pool 0, the resource pool 1, and the resource pool 2 configured by the configuration apparatus are separately formed by different hardware computing units, and a same hardware computing unit is not allocated to different resource pools. In other words, the physical resources in the resource pool 0, the resource pool 1, and the resource pool 2 are isolated from each other.

The configuration apparatus may make a plurality of hardware computing units divided from one acceleration apparatus correspond to different resource pools. For example, the AI processor is physically divided into four AICs, and the four AICs are respectively an AIC 1 to an AIC 4. When the configuration apparatus configures the correspondence between the resource pool and the hardware computing unit, the resource pool 1 may include the AIC 1 and the AIC 2, the resource pool 2 may include the AIC 3, and the resource pool 3 may include the AIC 4.

It may be understood that when the configuration apparatus in this embodiment of this application configures the correspondence between the resource pool and the hardware computing unit, different resource pools correspond to different hardware computing units, and a same hardware computing unit does not correspond to different resource pools. In other words, physical resources in different resource pools in a plurality of resource pools are isolated from each other. Therefore, physical resources occupied by VFs corresponding to different resource pools are isolated from each other, and security is good. For example, when the configuration apparatus makes each VF correspond to one resource pool, different VFs correspond to different resource pools. The physical resources in different resource pools are isolated from each other, so that each VF independently occupies a physical resource in a resource pool corresponding to the VF, physical resources occupied by different VFs are isolated from each other, and security is good.

Optionally, as shown in FIG. 5, at least one virtual machine may run on the server, and each virtual machine corresponds to one or more VFs. The configuration apparatus is further configured to configure a queue channel resource corresponding to each virtual machine, so that the virtual machine may send a task of the virtual machine to a corresponding queue based on the queue channel resource configured by a configuration module.

For example, as shown in FIG. 5, four virtual machines run on the server, and the four virtual machines are respectively a virtual machine VM 0 to a virtual machine VM 3. The configuration apparatus may configure corresponding queue channel resources for the VM 0 to VM 3 respectively. The virtual machine VM 1 may send a task to a corresponding queue 0 or queue 1 based on the queue channel resources configured by the configuration apparatus.

Optionally, the configuration apparatus is further configured to configure a correspondence between each queue and the VF. One queue may correspond to one VF, and a plurality of queues may correspond to a same VF.

For example, as shown in FIG. 5, the configuration apparatus may make the queue 0 of the VM 0 correspond to the VF 0, make a queue 0 and a queue 1 of the VM 1 correspond to the VF 1, make a queue 0 and a queue 1 of the VM 2 correspond to the VF 2, make a queue 0 of the VM 3 correspond to the VF 3, and make a queue 1 of the VM 3 correspond to the VF 4. In other words, in this embodiment of this application, one virtual machine may correspond to one or more VFs. A quantity of VFs corresponding to each virtual machine is not limited in this embodiment of this application. FIG. 5 is merely an example.

Optionally, when the configuration apparatus maps a plurality of VFs to one resource pool (in other words, one resource pool corresponds to a plurality of VFs), the configuration apparatus may further configure a resource scheduling manner of the plurality of VFs. For example, the resource scheduling manner of the plurality of VFs may include but is not limited to the following plurality of scheduling types: strict scheduling, elastic scheduling, scheduling based on end time of a time period, scheduling based on end time of a task, and the like. The following describes these scheduling types.

When the configuration apparatus configures the resource scheduling manner of the plurality of VFs as strict scheduling, the scheduling apparatus may schedule a task of each VF strictly based on a running time period of each VF in the plurality of VFs. Within a running time period of one VF, even if the VF currently has no task, time of the running time period of the VF is still occupied. After the running time period of the VF ends, the scheduling apparatus schedules a task of another VF.

For example, to reduce costs, a plurality of users may purchase a same resource pool, and the plurality of users share a hardware computing unit in the resource pool in a time-sliced manner. However, the plurality of users who use the resource pool are not familiar with each other. To improve service security of each user, the user may request to configure the resource scheduling manner of the plurality of VFs as strict scheduling, so that each user occupies the hardware computing unit in the resource pool corresponding to the VF only within a running time period of the user.

When the configuration apparatus configures the resource scheduling manner of the plurality of VFs as elastic scheduling, the scheduling apparatus may elastically schedule the task of each VF based on the running time period of each VF in the plurality of VFs. Within a running time period of one VF, if the VF currently has no task, the scheduling apparatus may schedule a task of another VF, in other words, the another VF may occupy time of a running time period of the VF.

For example, to reduce costs, a plurality of users may purchase one resource pool, and the plurality of users share a hardware computing unit in the resource pool in a time-sliced manner. In addition, the plurality of users who use the resource pool are familiar with each other, and no security problem exists. In this way, to improve a resource utilization rate, the user may request to configure the resource scheduling manner of the plurality of VFs as elastic scheduling. In this way, if a first user has no task before a running time period of the first user ends, a second user may occupy time of the running time period of the first user. In other words, the second user may occupy a hardware computing unit in a first resource pool within the running time period of the first user.

When the configuration apparatus configures the resource scheduling manner of the plurality of VFs as scheduling based on end time of a running time period, if a task of one VF is still not completely executed when a running time period of the VF ends, a hardware computing unit in a resource pool may be indicated to stop executing the task of the VF and save a context. When the scheduling apparatus schedules the VF next time, the hardware computing unit in the resource pool may continue to execute the task of the VF based on the saved context of the task of the VF.

When the configuration apparatus configures the resource scheduling manner of the plurality of VFs as scheduling based on running end time of a task, if a task of one VF is still not completely executed when a running time period of the VF ends, a hardware computing unit in a resource pool may be indicated to continue to execute the task of the VF. In addition, when the scheduling apparatus schedules the VF next time, time of the running time period of the VF is correspondingly reduced.

Optionally, the configuration apparatus may configure, based on a task type or a user requirement, the resource scheduling manner of the plurality of VFs as scheduling based on end time of a running time period or scheduling based on running end time of a task.

When one resource pool corresponds to a plurality of VFs, the configuration information sent by a processor to the scheduling apparatus through a transmission interface further indicates the resource scheduling manner of the plurality of VFs.

It may be understood that in this embodiment of this application, when making one resource pool correspond to a plurality of VFs, the configuration apparatus may further configure a resource scheduling manner of the plurality of VFs, so that the scheduling apparatus can schedule, based on different types of scheduling manners configured by the configuration apparatus, tasks of the plurality of VFs in a time-sliced manner, to meet service requirements of different application scenarios.

In different service scenarios, the configuration apparatus in this embodiment of this application may flexibly configure the running time information of the VF, the resource pool corresponding to the VF, and the correspondence between the resource pool and the hardware computing unit.

For example, when a service 1 is executed, the configuration apparatus may configure, for the service 1, that the running time information of the VF 0 is 10 ms, a resource pool corresponding to the VF 0 is a resource pool 1, and the resource pool 1 includes a hardware computing unit 1 to a hardware computing unit 3. For another example, when a service 2 is executed, the configuration apparatus may configure, for the service 2, that the running time information of the VF 0 is 5 ms, a resource pool corresponding to the VF 0 is a resource pool 2, and physical resources included in the resource pool 2 are a hardware computing unit 1 and a hardware computing unit 4.

The configuration apparatus may flexibly configure the resource pool corresponding to the VF and the running time information of the VF in the following two implementations. The following describes in detail a specific implementation in which a processor in the configuration apparatus configures the resource pool corresponding to the VF and the running time information of the VF.

In a first implementation, the processor is specifically configured to configure, based on user request information, the resource pool corresponding to the VF and the running time information of the VF. The user request information includes at least one of the type of the hardware computing unit, the quantity of hardware computing units, a quantity of users, or the resource scheduling manner.

For example, in a cloud scenario, the user expects to independently occupy a purchased computing power resource, and not be affected by other users. The user may enter user request information needed by the user, for example, a type of a resource pool, the quantity of hardware computing units, and the quantity of users. The configuration apparatus may configure, based on the user request information, that each VF corresponds to one resource pool, different VFs correspond to different resource pools, and physical resources in the different resource pools are isolated from each other. In other words, the configuration apparatus may configure that a hardware resource of an acceleration apparatus is divided based on a MIG, to enable computing resources of the plurality of users to be isolated from each other.

For another example, in an enterprise scenario or an education scenario, the user expects that more people can share, through time-sliced scheduling, a computing power resource provided by the server. The configuration apparatus may configure, based on user request information entered by the user, that each resource pool corresponds to a plurality of VFs, and the plurality of VFs share a hardware computing unit in the resource pool in a time-sliced manner. In other words, the configuration apparatus may configure that a hardware resource of an acceleration apparatus is divided based on a time slice.

For still another example, in a private cloud scenario or a public cloud scenario, if the scheduling apparatus is leased or sold to an enterprise or an education entity, the configuration apparatus may configure, based on user request information, that each resource pool in some resource pools corresponds to a plurality of VFs, each resource pool in the other resource pools corresponds to one VF, and different resource pools correspond to different VFs. In other words, the configuration apparatus may configure computing power division on a hardware resource of an acceleration apparatus as combination division based on time period division and MIG division, to meet different computing power requirements of the user.

For still another example, if the user expects to purchase one piece of computing power that meets an isolation requirement, and expects to improve the resource utilization rate through time-sliced scheduling, the configuration apparatus may configure, based on user request information, that each resource pool in some resource pools corresponds to a plurality of VFs, each resource pool in the other resource pools corresponds to one VF, and different resource pools correspond to different VFs. In other words, the configuration apparatus may configure computing power division on a hardware resource of an acceleration apparatus as combination division based on time slice division and MIG division, so that a complex requirement of a customer can be better met.

It may be understood that, the configuration apparatus provided in this embodiment of this application can flexibly divide computing power of the acceleration apparatus based on requirements of different application scenarios. This can meet a complex user requirement and improve a resource utilization rate of the hardware resource.

In a second implementation, the processor is further specifically configured to configure, based on resource usage information, the resource pool corresponding to the VF and the running time information of the VF. The resource usage information includes at least one of a quantity of VFs or usage of the hardware computing unit in the resource pool.

For example, when dynamically determining the configuration information, the configuration apparatus may further flexibly configure, based on usage of each hardware computing unit in the acceleration apparatus and the specific quantity of VFs, the running time information of the VF, a correspondence between the VF and the resource pool, and the correspondence between the resource pool and the hardware computing unit.

Because the configuration apparatus may flexibly configure the resource pool corresponding to the VF and the correspondence between the resource pool and the hardware computing unit, the configuration apparatus may flexibly regroup the correspondence between the hardware resource and the VF. For example, in some examples, one VF may correspond to one resource pool, and the VF independently occupies a hardware computing unit in the resource pool corresponding to the VF. In some other examples, a plurality of VFs may correspond to one resource pool, and the plurality of VFs may occupy a hardware computing unit in the resource pool in a time-sliced manner. Because the resource pool corresponding to the VF and the correspondence between the resource pool and the computing unit can be flexibly regrouped, the configuration apparatus can flexibly divide computing power of the hardware resource in different service scenarios. In addition, combination division based on time slice division and MIG division can be performed on the hardware resource, and therefore a resource utilization rate of the hardware resource can be effectively improved. By using the configuration apparatus in this embodiment of this application, an individual cloud user or a small enterprise customer can purchase resources and computing power on demand to deploy an AI application at a low cost.

An embodiment of this application further provides a scheduling apparatus. The scheduling apparatus may be a software module, or may be a hardware module. When the scheduling apparatus is a software module, the scheduling apparatus may be deployed on a processor. For example, the scheduling apparatus may be deployed on a CPU.

As shown in FIG. 3 or FIG. 4, the scheduling apparatus may be integrated with the configuration apparatus, or may be disposed independently of the configuration apparatus. This is not limited in this embodiment of this application. The scheduling apparatus includes a processor and a transmission interface.

The processor is configured to receive the configuration information from the configuration apparatus through the transmission interface. For related descriptions of the configuration information, refer to the foregoing embodiments. Details are not described herein again.

Optionally, the scheduling apparatus may further include a cache, and the cache is configured to store running time information corresponding to each of at least one VF. For example, the scheduling apparatus may configure, for each VF, a cache space used to store the running time information, so that the scheduling apparatus can receive a configuration of the configuration apparatus in a time dimension, and can implement time-sliced scheduling by using the running time information of the VF stored in the cache.

The processor is further configured to make a route identifier of the VF correspond to a route identifier of the resource pool. For example, the processor may make, based on the correspondence that is between the VF and the resource pool and that is in the configuration information, the route identifier of the VF correspond to the route identifier of the resource pool.

For example, in this application, the configuration apparatus may configure the resource pool corresponding to the VF. After receiving the configuration information, the scheduling apparatus may separately abstract each VF and each resource pool into a route identifier based on the resource pool corresponding to the VF in the configuration information, and make the route identifier of the VF correspond to the route identifier of the resource pool. In this application, the scheduling apparatus may abstractly make the route identifier of the VF correspond to the route identifier of the resource pool. Therefore, when the correspondence that is between the VF and the resource pool and that is in the configuration information changes, the scheduling apparatus may change a correspondence between the route identifier of the VF and the route identifier of the resource pool, to dynamically change the correspondence between the VF and the resource pool. In other words, in this application, the scheduling apparatus regroup the route identifier of the VF and the route identifier of the resource pool to flexibly regroup the VF and the hardware resource.

Optionally, the scheduling apparatus may make a sequence number of the VF correspond to a sequence number of the resource pool by using a selector, to flexibly regroup the VF and the resource pool. A specific implementation in which the scheduling apparatus makes the route identifier of the VF correspond to the route identifier of the resource pool is not limited in this embodiment of this application.

The processor is further configured to make the route identifier of the resource pool correspond to a route identifier of the hardware computing unit. For example, the processor may make, based on the correspondence that is between the resource pool and the hardware computing unit and that is in the configuration information, the route identifier of the resource pool correspond to the route identifier of the hardware computing unit.

For example, in this application, the configuration apparatus may configure the correspondence between the resource pool and the hardware computing unit. After receiving the configuration information, the scheduling apparatus may separately abstract each resource pool and each hardware computing unit into a route identifier based on the correspondence that is between the resource pool and the hardware computing unit and that is in the configuration information, and make the route identifier of the resource pool correspond to the route identifier of the hardware computing unit. In this application, the scheduling apparatus may abstractly make the route identifier of the resource pool correspond to the route identifier of the hardware computing unit. Therefore, when the correspondence that is between the resource pool and the hardware computing unit and that is in the configuration information changes, the scheduling apparatus may change the correspondence between the route identifier of the resource pool and the route identifier of the hardware computing unit, to dynamically change the correspondence between the resource pool and the hardware computing unit. In other words, in this application, the scheduling apparatus regroup the route identifier of the resource pool and the route identifier of the hardware computing unit to flexibly regroup the resource pool and the hardware computing unit.

The at least one virtual machine running on the server includes a first virtual machine, and the first virtual machine may be any virtual machine in the server. The following describes a specific function of the scheduling apparatus in detail by using an example in which the scheduling apparatus schedules a first task of the first virtual machine.

The processor is further configured to receive the first task of the first virtual machine through the transmission interface, and determine a first VF corresponding to the first task and a first resource pool corresponding to the first VF. Optionally, the processor may determine, based on the correspondence between each queue and the VF, the first VF corresponding to the first task. Alternatively, the processor may determine, based on a first VF identifier carried in the first task, the first VF corresponding to the first task.

For example, as shown in FIG. 5, the first task is a task of the virtual machine VM 3, and a queue in which the first task is located is the queue 0 corresponding to the VM 3. The scheduling apparatus may determine, based on the correspondence that is between each queue and the VF and that is in the configuration information, that the queue 0 of the VM 3 corresponds to the VF 3, and may determine, based on the correspondence that is between the VF and the resource pool and that is in the configuration information, that the VF 3 corresponds to the resource pool 2, and that the VF 3 and the VF 4 occupy the resource pool 2 in a time-sliced manner.

For another example, as shown in FIG. 5, that the first task is a task of the virtual machine VM 3 is used as an example. The first task may carry an identifier of the VF 3. The scheduling apparatus determines that the first VF corresponding to the first task is the VF 3, and may determine, based on the correspondence that is between the VF and the resource pool and that is in the configuration information, that the VF 3 corresponds to the resource pool 2, and the VF 3 and the VF 4 occupy the resource pool 2 in a time-sliced manner.

It may be understood that the correspondence between the first task and the first VF may be determined by carrying the first VF identifier in the first task, may be determined by using a correspondence between the queue in which the first task is located and the first VF, or may be determined in another manner. This is not limited in this embodiment of this application.

The processor is configured to schedule, based on the configuration information, a hardware computing unit in the first resource pool corresponding to the first VF, to implement a function of the first VF.

There may be one or more VFs corresponding to the first resource pool. When the first resource pool corresponds to one VF, the first VF independently occupies a physical resource in the first resource pool. When the first resource pool corresponds to a plurality of VFs, the first VF and other VFs occupy a physical resource in the first resource pool in a time-sliced manner. The plurality of VFs include the first VF.

When the first resource pool corresponds to one VF, the VF is the first VF, and the first VF independently occupies the hardware computing unit in the first resource pool. The processor in the scheduling apparatus determines that running time information of the first VF is invalid, and schedules, based on the configuration information, the hardware computing unit in the first resource pool corresponding to the first VF, to implement the function of the first VF.

When the first resource pool corresponds to a plurality of VFs, an example in which the plurality of VFs include the first VF and a second VF is used. The first VF and the second VF occupy the hardware computing unit in the first resource pool in a time-sliced manner. When the first resource pool corresponds to a plurality of VFs, the scheduling apparatus may schedule the task of the first VF and a task of the second VF based on the resource scheduling manner configured by the configuration apparatus and running time information of the first VF and the second VF. The following describes a specific implementation in which the scheduling apparatus schedules the task of the first VF and the task of the second VF by separately using an example in which the resource scheduling manner is strict scheduling, elastic scheduling, scheduling based on end time of a running time period, or scheduling based on running end time of a task.

In a first implementation, when the resource scheduling manner configured by the configuration apparatus is strict scheduling, the scheduling apparatus schedules the task of the first VF and the task of the second VF strictly based on the running time information of the first VF and the running time information of the second VF. In this implementation, even if one VF has no task, time of a running time period of the VF is still occupied.

The processor is specifically configured to: based on the running time information of the first VF and the running time information of the second VF, send the task of the first VF to the first resource pool through the transmission interface within a running time period of the first VF, and send the task of the second VF to the first resource pool through the transmission interface within a running time period of the second VF.

For example, as shown in FIG. 5, the first VF is the VF 0, the second VF is the VF 1, the running time information of the VF 0 is 10 ms, and the running time information of the VF 1 is 5 ms. For example, a resource scheduling manner of the VF 0 and the VF 1 is strict scheduling. The scheduling apparatus determines, based on the configuration information, that the VF 0 and the VF 1 occupy the resource pool 0 in a time-sliced manner. The scheduling apparatus sends a task of the VF 0 to the hardware computing unit in the resource pool 0 within the running time period (10 ms) of the VF 0. Starting from the end of the running time period of the VF 0, within the running time period (5 ms) of the VF 1, the scheduling apparatus sends a task of the VF 1 to the hardware computing unit in the resource pool 0.

In this implementation, within the running time period of the first VF, even if the first VF currently has no task to be executed, the first VF still occupies all physical resources of the first resource pool. Therefore, within the running time period of the first VF, the scheduling apparatus does not send the task of the second VF to the first resource pool. In other words, within the running time period of the first VF, if the first VF has a task, the physical resource in the first resource pool executes the task of the first VF; or if the first VF has no task, the physical resource in the first resource pool is still occupied by the first VF and does not execute the task of the second VF.

In a second implementation, when the resource scheduling manner configured by the configuration apparatus is elastic scheduling, the scheduling apparatus schedules the task of the first VF and the task of the second VF elastically based on the running time information of the first VF and the running time information of the second VF. In this implementation, before a running time period of one VF ends, if the VF has no task, another VF may occupy time of the running time period of the VF.

The processor is specifically configured to: before the running time period of the first VF ends, if the first VF currently has no task, send the task of the second VF to the first resource pool through the transmission interface.

In this implementation, before the running time period of the first VF ends, if the first VF currently has no task to be executed, the scheduling apparatus may send the task of the second VF to the first resource pool. That is, the second VF may occupy time of the running time period of the first VF.

For example, as shown in FIG. 5, the running time information of the VF 0 is 10 ms, and the running time information of the VF 1 is 5 ms. At the 8^{th} ms of the running time period of the VF 0, if the VF 0 currently has no task to be executed, the scheduling apparatus may send the task of the VF 1 to the hardware computing unit in the resource pool 0, and the hardware computing unit in the resource pool 0 receives and executes the task of the VF 1.

The processor is further configured to correspondingly increase the time of the running time period of the first VF when the task of the first VF is scheduled next time.

Before the running time period of the first VF ends, the scheduling apparatus sends the task of the second VF to the first resource pool, in other words, the task of the second VF occupies the time of the running time period of the first VF. Therefore, when scheduling the task of the first VF next time, the scheduling apparatus needs to supplement the time that is of the running time period of the first VF and that is occupied by the task of the second VF. Therefore, the scheduling apparatus correspondingly increases the time of the running time period of the first VF when scheduling the task of the first VF next time.

For example, the running time information of the first VF is A seconds, duration for executing the task of the first VF in the first resource pool is B seconds, B is less than A, and the scheduling apparatus starts to send the task of the second VF to the first resource pool from the B^{th} second. When scheduling the task of the first VF next time, the scheduling apparatus may increase the time of the running time period of the first VF by (A - B) seconds.

For example, as shown in FIG. 5, the running time information of the VF 0 is 10 ms, and the running time information of the VF 1 is 5 ms. At the 8^{th} ms of the running time period of the VF 0, if the VF 0 currently has no task to be executed, the scheduling apparatus may send the task of the VF 1 to the hardware computing unit in the resource pool 0, and the hardware computing unit in the resource pool 0 receives and executes the task of the VF 1. When scheduling the task of the VF 0 next time, the scheduling apparatus increases the time of the running time period of the VF 0 by 2 ms, in other words, when the scheduling apparatus schedules the task of the VF 0 next time, the time of the running time period of the VF 0 is 12 ms.

The processor is further configured to release the time of the running time period of the first VF or return the time of the running time period of the first VF to zero when time obtained by increasing the time of the running time period of the first VF exceeds first preset duration.

If the task of the second VF keeps occupying the time of the running time period of the first VF, the time of the running time period of the first VF keeps increasing. If the time obtained by increasing the time of the running time period of the first VF is too long, improper resource allocation may be caused. In this way, when the time obtained by increasing the time of the running time period of the first VF exceeds first preset duration, the processor in the scheduling apparatus may release the time of the running time period of the first VF or return the time of the running time period of the first VF to zero.

In a third implementation, when the resource scheduling manner configured by the configuration apparatus is scheduling based on end time of a running time period, when the scheduling apparatus schedules the task of the first VF and the task of the second VF based on the running time information of the first VF and the running time information of the second VF, and when a running time period of one VF ends, if a task of the VF is still not completely executed, the scheduling apparatus indicates the first resource pool to stop executing the task of the VF and save a context.

The processor is further configured to send a first instruction to the first resource pool through the transmission interface when the running time period of the first VF ends, where the first instruction is used to instruct the first resource pool to stop executing the task of the first VF when the task of the first VF is not completely executed and save a context for executing the task of the first VF.

In this implementation, the scheduling apparatus may schedule the task of the VF strictly based on end time of the running time period of each VF. In other words, when the running time period of the first VF ends, even if the task of the first VF is not completely executed, the scheduling apparatus indicates the first resource pool to stop executing the task of the first VF, and saves the context for executing the task of the first VF. When the scheduling apparatus schedules the first VF next time, the hardware computing unit in the first resource pool may continue to execute the task of the first VF based on the saved context of the task of the first VF.

In a fourth implementation, when the resource scheduling manner configured by the configuration apparatus is scheduling based on running end time of a task, when the scheduling apparatus schedules the task of the first VF and the task of the second VF based on the running time information of the first VF and the running time information of the second VF, and when a running time period of one VF ends, if a task of the VF is still not completely executed, the scheduling apparatus indicates the first resource pool to continue to execute the task of the VF. When scheduling the VF next time, the scheduling apparatus correspondingly reduces time of the running time period of the VF.

The processor is further configured to send a second instruction to the first resource pool through the transmission interface when the running time period of the first VF ends, where the second instruction is used to instruct the first resource pool to continue to execute the task of the first VF when the task of the first VF is not completely executed.

In this implementation, when the running time period of the first VF ends, if the task of the first VF is not completely executed, the scheduling apparatus may indicate the first resource pool to continue to execute the task of the first VF. Because the task of the first VF is still being executed after the running time period of the first VF ends, the task of the first VF occupies time of the running time period of the second VF.

The processor is further configured to correspondingly reduce the time of the running time period of the first VF when the task of the first VF is scheduled next time.

Because the task of the first VF is still being executed after the running time period of the first VF ends, in other words, because the task of the first VF occupies the time of the running time period of the second VF, when scheduling the task of the first VF next time, the scheduling apparatus needs to return the time that is of the running time period of the second VF and that is occupied by the task of the first VF. Therefore, the scheduling apparatus correspondingly reduces the time of the running time period of the first VF when scheduling the task of the first VF next time.

For example, the running time information of the first VF is A seconds, duration for executing the task of the first VF in the first resource pool is C seconds, and C is greater than A. When scheduling the task of the first VF next time, the scheduling apparatus may reduce the time of the running time period of the first VF by (C - A) seconds.

For example, as shown in FIG. 5, the running time information of the VF 0 is 10 ms, the running time information of the VF 1 is 5 ms, and duration for executing the task of the VF 0 by the resource pool 0 is 12 ms. When the running time period of the VF 0 ends, if the task of the VF 0 is not completely executed, the resource pool 0 may continue to execute the task of the VF 0. If the resource pool 0 takes another 2 seconds to complete execution of the task of the VF 0 (in other words, duration for executing the task of the VF 0 is 12 ms), after the hardware computing unit in the resource pool 0 completely executes the task of the VF 0, the scheduling apparatus sends the task of the VF 1 to the hardware computing unit in the resource pool 0. In addition, when scheduling the task of the VF 0 next time, the scheduling apparatus reduces the time of the running time period of the VF 0 by 2 ms, in other words, when the scheduling apparatus schedules the task of the VF 0 next time, the time of the running time period of the VF 0 is 8 ms.

The processor is further configured to send a third instruction to the first resource pool through the transmission interface when execution time of the task of the first VF exceeds duration of the running time period of the first VF and reaches second preset duration, and the task of the first VF is still not completely executed. The third instruction is used to instruct the first resource pool to stop executing the task of the first VF. The second preset duration may be determined based on factors such as a service feature and a parameter of the server. Specific duration of the second preset duration is not limited in this embodiment of this application.

When the execution time of the task of the first VF exceeds the time of the running time period of the first VF and reaches the second preset duration, if the task of the first VF is still not completely executed, the task of the first VF may be faulty. In this case, the scheduling apparatus may indicate the first resource pool to forcibly stop executing the task of the first VF, to avoid a problem that the first VF occupies the first resource pool for a long period of time and wastes resources because a fault occurs in an execution process of the task of the first VF.

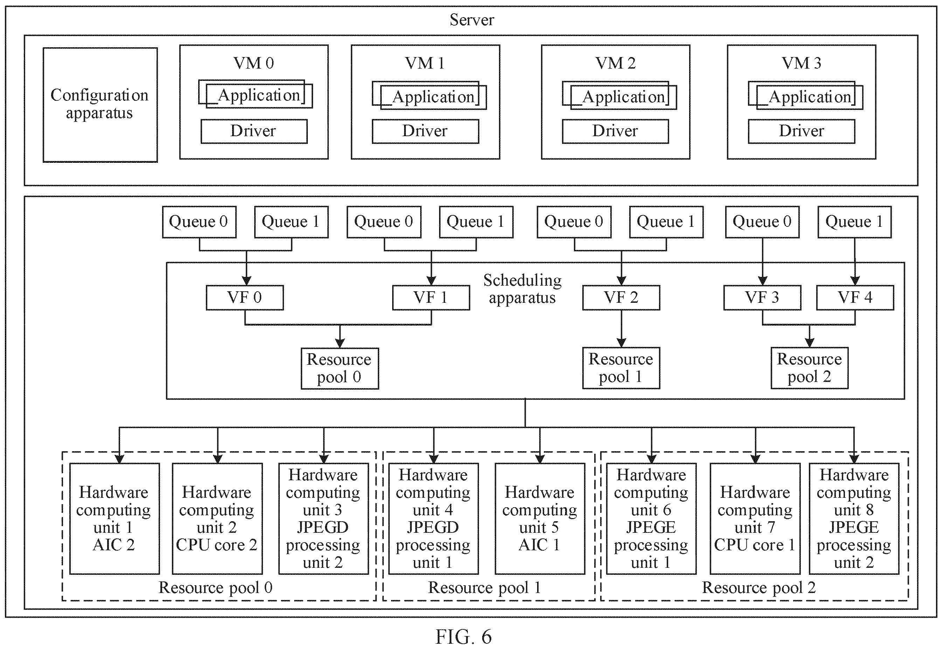

FIG. 6 is a schematic diagram of a structure of a server according to an embodiment of this application. As shown in FIG. 6, a configuration apparatus may configure a hardware computing unit 1 to a hardware computing unit 3 as a resource pool 0, make a VF 0 and a VF 1 correspond to the resource pool 0, and configure running time information of the VF 0 and the VF 1. The configuration apparatus may configure a hardware computing unit 4 and a hardware computing unit 5 as a resource pool 1, make a VF 2 correspond to the resource pool 1, and configure running time information of the VF 2. The configuration apparatus may configure a hardware computing unit 6 to a hardware computing unit 8 as a resource pool 2, make a VF 3 and a VF 4 correspond to the resource pool 2, and configure running time information of the VF 3 and the VF 4. It may be understood that, in this configuration manner, a division manner of an acceleration apparatus is a combination division manner based on MIG division and time slice division.

For example, as shown in FIG. 6, a first task is an image decoding task, in the image decoding task, a VM 2 generates a corresponding task packet, and the corresponding task packet is delivered to the VF 2 by using a queue 0 of the VM 2, where the running time information of the VF 2 is 10 ms, the hardware computing unit 4 in the resource pool 1 is a JPEGD processing unit 1, and the hardware computing unit 5 is an AIC 1. Based on configuration information of the VF 2 corresponding to the image decoding task, the scheduling apparatus makes a route identifier of the VF 2 correspond to a route identifier of the resource pool 1, and makes the route identifier of the resource pool 1 correspond to a route identifier of the JPEGD processing unit 1 and a route identifier of the AIC 1. Because the resource pool 1 corresponds to one VF, namely, the VF 2, the scheduling apparatus may determine that the VF 2 exclusively occupies the hardware computing unit in the resource pool 1, and determine that the running time information corresponding to the VF 2 is invalid. The scheduling apparatus sends the image decoding task to the hardware computing unit 4 (for example, the JPEGD processing unit 1) in the resource pool 1. The JPEGD processing unit 1 executes the image decoding task and returns a result to the VM 2.

For another example, as shown in FIG. 6, a first task is a 3D convolution task, in the 3D convolution task, a VM 0 generates a corresponding task packet, and the corresponding task packet is delivered to the VF 0 by using a queue 0 of the VM 0, where the running time information of the VF 0 is 10 ms, the running time information of the VF 1 is 5 ms, the hardware computing unit 1 in the resource pool 0 is an AIC 2, the hardware computing unit 2 is a CPU core 2, and the hardware computing unit 3 is a JPEGD processing unit 2. The scheduling apparatus may determine, based on configuration information of the VF 0 corresponding to the 3D convolution task, that the VF 0 corresponds to the resource pool 0, and the resource pool 0 corresponds to the VF 0 and the VF 1. The scheduling apparatus makes a route identifier of the VF 0 and a route identifier of the VF 1 correspond to a route identifier of the resource pool 0, and makes the route identifier of the resource pool 0 correspond to a route identifier of the AIC 2, a route identifier of the CPU core 2, and a route identifier of the JPEGD processing unit 2. Because the resource pool 0 corresponds to the VF 0 and the VF 1, the scheduling apparatus determines that the VF 0 and the VF 1 occupy the hardware computing unit of the resource pool 0 in a time-sliced manner, and the running time information of the VF 0 and the VF 1 is valid. The scheduling apparatus sends the 3D convolution task to a corresponding hardware computing unit (for example, the AIC 2) in the resource pool 0 within a running time period (10 ms) of the VF 0. Starting from the end of the running time period of the VF 0, within a running time period (5 ms) of the VF 1, the scheduling apparatus sends a task of the VF 1 to the corresponding hardware computing unit in the resource pool 0.

For another example, as shown in FIG. 6, a first task is an image encoding task, in the image encoding task, a VM 3 generates a corresponding task packet, and the corresponding task packet is delivered to the VF 3 by using a queue 0 of the VM 3, where the running time information of the VF 3 is 5 ms, the running time information of the VF 4 is 10 ms, the hardware computing unit 6 in the resource pool 2 is a JPEGE processing unit 1, the hardware computing unit 7 is a CPU core 1, and the hardware computing unit 8 is a JPEGE processing unit 2. The scheduling apparatus may determine, based on configuration information of the VF 3 corresponding to the image encoding task, that the VF 3 corresponds to the resource pool 2, and the resource pool 2 corresponds to the VF 3 and the VF 4. The scheduling apparatus makes a route identifier of the VF 3 and a route identifier of the VF 4 correspond to a route identifier of the resource pool 2, and makes the route identifier of the resource pool 2 correspond to a route identifier of the JPEGE processing unit 1, a route identifier of the CPU core 1, and a route identifier of the JPEGE processing unit 2. Because the resource pool 2 corresponds to the VF 3 and the VF 4, the scheduling apparatus determines that the VF 3 and the VF 4 occupy the hardware computing unit of the resource pool 2 in a time-sliced manner, and the running time information of the VF 3 and the VF 4 is valid. The scheduling apparatus sends the image encoding task to the hardware computing unit 6 (for example, the JPEGE processing unit 1) in the resource pool 2 within a running time period (5 ms) of the VF 3. The scheduling apparatus sends a task of the VF 4 to the corresponding hardware computing unit in the resource pool 2 within a running time period (10 ms) of the VF 4.

It may be understood that, in this application, the scheduling apparatus may schedule, based on configuration information, a hardware computing unit in a resource pool corresponding to a VF, to implement a function of the VF. The configuration information indicates running time information of the VF, the resource pool corresponding to the VF, and a correspondence between the resource pool and a computing unit. In other words, in this solution, triple configuration may be implemented, a correspondence between a hardware resource and the VF may be flexibly grouped, the VF may be flexibly scheduled in a time dimension, and the resource pool and the hardware computing unit may be flexibly grouped. Therefore, combination division based on time slice division and MIG division can be performed on the hardware resource. In addition, because the configuration information is flexibly configured by the configuration apparatus, the correspondence between the VF and the resource pool may change dynamically, in different service scenarios, the configuration apparatus can flexibly perform computing power division on the hardware resource in the acceleration apparatus. Therefore, the scheduling apparatus may schedule, based on dynamically determined configuration information, the hardware computing unit in the resource pool corresponding to the VF, to implement a function of the VF. This can effectively improve a resource utilization rate.

Because computing power of an acceleration apparatus such as an AI processor is large, the acceleration apparatus may be physically divided into a plurality of hardware computing units, and different types of combinations and configurations are performed on the divided hardware computing units, to improve a utilization rate of a hardware computing resource. Table 1 shows resource usage when a computing task is executed in different configuration manners. The following describes beneficial effects of the solution provided in this embodiment of this application with reference to Table 1.

**Table 1**

| Network name | 32-core physical machine data | | Operator group container data | | Core ratio | Throughput ratio |
|---|---|---|---|---|---|---|
| | Core quantity | Throughput | Core quantity | Throughput | | |
| VGG16 | 32 | 914 | 16 | 574 | 50.00% | 62.80% |
| VGG16 | 32 | 646 | 8 | 260 | 50.00% | 40.25% |
| Resnet50 | 32 | 1904 | 16 | 1108 | 25.00% | 58.19% |
| Resnet50 | 32 | 1904 | 8 | 607 | 25.00% | 31.88% |

For example, as shown in Table 1, for a VGG16 having 32 physical cores, a throughput of the 32 physical cores as one resource pool for executing the computing task is 914. If the 32 physical cores are divided into two resource pools, each resource pool includes 16 physical cores. A throughput of the 16 physical cores as one resource pool for executing the computing task is 574. In this way, a throughput (1148) of two 16-core resource pools for executing the computing task is greater than a throughput (914) of one 32-core resource pool for executing the computing task. It is clear that the utilization rate of the computing resource can be improved by dividing the 32 physical cores into two resource pools.

For another example, as shown in Table 1, for a VGG16 having 32 physical cores, a throughput of the 32 physical cores as one resource pool for executing the computing task is 646. If the 32 physical cores are divided into four resource pools, each resource pool includes eight physical cores. A throughput of the eight physical cores as one resource pool for executing the computing task is 260. In this way, a throughput (1040) of four 8-core resource pools for executing the computing task is greater than a throughput (646) of one 32-core resource pool for executing the computing task. It is clear that the utilization rate of the computing resource can be improved by dividing the 32 physical cores into four resource pools.

For example, as shown in Table 1, for a Resnet50 having 32 physical cores, a throughput of the 32 physical cores as one resource pool for executing the computing task is 1904. If the 32 physical cores are divided into two resource pools, each resource pool includes 16 physical cores. A throughput of the 16 physical cores as one resource pool for executing the computing task is 1108. In this way, a throughput (2216) of two 16-core resource pools for executing the computing task is greater than a throughput (1904) of one 32-core resource pool for executing the computing task. If the 32 physical cores are divided into four resource pools, each resource pool includes eight physical cores. A throughput of the eight physical cores as one resource pool for executing the computing task is 607. In this way, a throughput (2428) of four 8-core resource pools for executing the computing task is greater than a throughput (1904) of one 32-core resource pool for executing the computing task. It is clear that when a quantity of resource pools divided from the 32 physical cores is large, the utilization rate of the computing resource can be significantly improved compared to a case in which a quantity of resource pools divided from the 32 physical cores is small.

It is clear that, with reference to Table 1, it can be learned that for a same acceleration apparatus, when a quantity of resource pools obtained through division is large, the utilization rate of the computing resource can be significantly improved compared to a case in which a quantity of resource pools obtained through division is small. Therefore, in this application, the acceleration apparatus is physically divided into a plurality of hardware computing units, and the plurality of hardware computing units are flexibly regrouped into a plurality of resource pools, so that the utilization rate of the computing resource can be improved. In addition, by configuring the running time information of each VF, the correspondence between the VF and the resource pool, and the correspondence between the resource pool and the hardware computing unit, time-sliced scheduling can be implemented on the basis of hardware isolation. Moreover, the computing power of the acceleration apparatus can be flexibly divided. Therefore, an individual cloud user or a small enterprise customer can purchase resources and computing power on demand to deploy an AI application at a low cost.

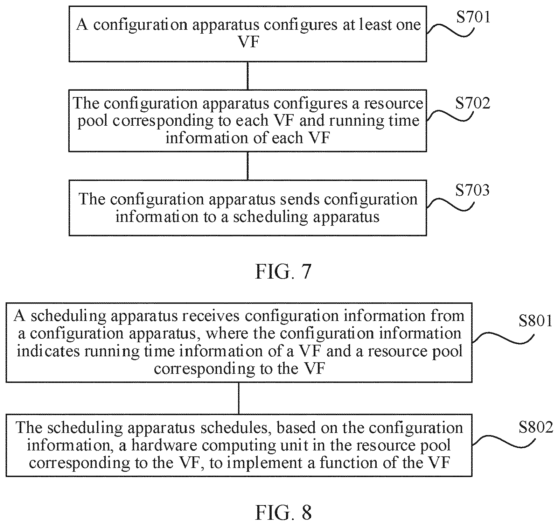

An embodiment of this application further provides a configuration method. As shown in FIG. 7, the method may include the following steps S701 to S703.

S701: A configuration apparatus configures at least one VF.

S702: The configuration apparatus configures a resource pool corresponding to each VF and running time information of each VF.

Each resource pool includes at least one hardware computing unit.

Optionally, the configuration apparatus may further configure a correspondence between the resource pool and the hardware computing unit. When one resource pool corresponds to a plurality of VFs, the configuration apparatus may further configure a resource scheduling manner of the plurality of VFs. The resource scheduling manner of the plurality of VFs may include but is not limited to the following plurality of scheduling types: strict scheduling, elastic scheduling, scheduling based on end time of a time period, scheduling based on end time of a task, and the like.

S703: The configuration apparatus sends configuration information to a scheduling apparatus.

The configuration information indicates running time information of the at least one VF and a resource pool corresponding to the at least one VF. For related descriptions of the configuration information, refer to related content in the foregoing embodiments. Details are not described herein again.

An embodiment of this application further provides a scheduling method. As shown in FIG. 8, the scheduling method includes the following steps S801 and S802.

S801: A scheduling apparatus receives configuration information from a configuration apparatus. The configuration information indicates running time information of a VF and a resource pool corresponding to the VF.

For related descriptions of the configuration information, refer to related content in the foregoing embodiments. Details are not described herein again.

S802: The scheduling apparatus schedules, based on the configuration information, a hardware computing unit in the resource pool corresponding to the VF, to implement a function of the VF.

The following describes a specific implementation of step S802 in detail by using an example in which the scheduling apparatus schedules a first task of a first virtual machine.

The foregoing step S802 includes: The scheduling apparatus determines, based on the configuration information, a first VF corresponding to the first task and a first resource pool corresponding to the first VF.

There may be one or more VFs corresponding to the first resource pool. When there is one VF, namely, the first VF, corresponding to the first resource pool, the first VF independently occupies a hardware computing unit in the first resource pool. In this case, the foregoing step S802 may include: The scheduling apparatus schedules the hardware computing unit in the first resource pool corresponding to the first VF, to implement a function of the first VF.

When there are a plurality of VFs corresponding to the first resource pool, the plurality of VFs include the first VF, and the plurality of VFs occupy a hardware computing unit in the first resource pool in a time-sliced manner. In this case, the foregoing step S802 may include: The scheduling apparatus schedules the hardware computing unit in the first resource pool in a time-sliced manner based on running time information of each of the plurality of VFs, to implement a function of the plurality of VFs.

The following describes a specific implementation of step S802 by using an example in which a plurality of VFs include the first VF and a second VF, and resource scheduling manners are strict scheduling, elastic scheduling, scheduling based on end time of a running time period, and scheduling based on running end time of a task.

In a first implementation, a type of the resource scheduling manner is strict scheduling, and the foregoing step S802 includes: Based on running time information of the first VF and running time information of the second VF, send a task of the first VF to the first resource pool within a running time period of the first VF, and send a task of the second VF to the first resource pool within a running time period of the second VF.

In this implementation, within the running time period of the first VF, even if the first VF currently has no task to be executed, the first VF still occupies all physical resources of the first resource pool. Therefore, within the running time period of the first VF, the task of the second VF is not sent to the first resource pool. In other words, within the running time period of the first VF, if the first VF has a task, the physical resource in the first resource pool executes the task of the first VF; or if the first VF has no task, the physical resource in the first resource pool is still occupied by the first VF and does not execute the task of the second VF.

In a second implementation, a type of the resource scheduling manner is elastic scheduling, and the foregoing step S802 includes: Before the running time period of the first VF ends, if the first VF currently has no task, the scheduling apparatus sends the task of the second VF to the first resource pool, and correspondingly increases time of the running time period of the first VF when scheduling the task of the first VF next time.

In this implementation, before the running time period of the first VF ends, the scheduling apparatus sends the task of the second VF to the first resource pool, in other words, the task of the second VF occupies the time of the running time period of the first VF. Therefore, when scheduling the task of the first VF next time, the scheduling apparatus needs to supplement the time that is of the running time period of the first VF and that is occupied by the task of the second VF. Therefore, the scheduling apparatus correspondingly increases the time of the running time period of the first VF when scheduling the task of the first VF next time.

If the task of the second VF keeps occupying the time of the running time period of the first VF, the time of the running time period of the first VF keeps increasing. If time obtained by increasing the time of the running time period of the first VF is too long, improper resource allocation may be caused. In this way, the foregoing step S802 may further include: When the time obtained by increasing the time of the running time period of the first VF exceeds first preset duration, the scheduling apparatus releases the time of the running time period of the first VF or returns the time of the running time period of the first VF to zero.

In a third implementation, a type of the resource scheduling manner is scheduling based on end time of a time period, and the foregoing step S802 includes: When the running time period of the first VF ends, the scheduling apparatus sends a first instruction to the first resource pool, where the first instruction is used to instruct the first resource pool to stop executing the task of the first VF when the task of the first VF is not completely executed, and save a context for executing the task of the first VF.

In this implementation, when the running time period of the first VF ends, if the task of the first VF is not completely executed, the scheduling apparatus indicates the hardware computing unit in the first resource pool to stop executing the task of the first VF, and saves the context for executing the task of the first VF. When the scheduling apparatus schedules the first VF next time, the hardware computing unit in the first resource pool may continue to execute the task of the first VF based on the saved context of the task of the first VF.

In a fourth implementation, a type of the resource scheduling manner is scheduling based on end time of a task, and the foregoing step S802 includes: When the running time period of the first VF ends, the scheduling apparatus sends a second instruction to the first resource pool, where the second instruction is used to instruct the first resource pool to continue to execute the task of the first VF when the task of the first VF is not completely executed, and correspondingly reduces the time of the running time period of the first VF when scheduling the task of the first VF next time.

In this implementation, because the task of the first VF is not completely executed within the running time period of the first VF, the task of the first VF occupies the time of the running time period of the second VF. Therefore, when scheduling the task of the first VF next time, the scheduling apparatus needs to return the time that is of the running time period of the second VF and that is occupied by the task of the first VF. Therefore, the scheduling apparatus correspondingly reduces the time of the running time period of the first VF when scheduling the task of the first VF next time.

In some examples, when the running time period of the first VF ends, if the task of the first VF is not completely executed, after receiving the second instruction, the hardware computing unit in the first resource pool may continue to execute the task of the first VF. In addition, the task of the second VF is sent to the first resource pool after the first resource pool completes execution of the task of the first VF.

Optionally, in this implementation, if execution time of the task of the first VF exceeds duration of the running time period of the first VF and reaches second preset duration, and the task of the first VF is still not completely executed, the foregoing step S802 may further include: The scheduling apparatus sends a third instruction to the first resource pool, where the third instruction is used to instruct the first resource pool to stop executing the task of the first VF.

In this implementation, when execution time of the task of the first VF exceeds duration of the running time period of the first VF for an excessively long period of time, if the task of the first VF is still not completely executed, the task of the first VF may be faulty. The scheduling apparatus may indicate the first resource pool to stop executing the task of the first VF, to avoid a problem that the first VF occupies the first resource pool for a long period of time and wastes resources.

An embodiment of this application further provides a computer-readable storage medium. The computer-readable storage medium has computer program code, and when the computer program code is run on a processor, the processor is enabled to perform the configuration method shown in FIG. 7, or perform the scheduling method shown in FIG. 8.

An embodiment of this application further provides a computer program product. The computer program product includes program instructions, and when the program instructions are executed, the configuration method shown in FIG. 7 is implemented, or the scheduling method shown in FIG. 8 is performed.

An embodiment of this application further provides a computing system. The computing system includes a configuration apparatus and a scheduling apparatus. The configuration apparatus is configured to configure at least one VF, configure a resource pool corresponding to each VF, and configure running time information of each VF. The resource pool includes at least one hardware computing unit. The configuration apparatus sends configuration information to the scheduling apparatus, where the configuration information indicates a resource pool corresponding to the at least one VF and running time information of the at least one VF. The scheduling apparatus is configured to schedule, based on the configuration information, the hardware computing unit in the resource pool corresponding to the VF, to implement a function of the VF.

Optionally, the configuration apparatus included in the computing system may be the configuration apparatus in the foregoing embodiments, and the scheduling apparatus included in the computing system may be the scheduling apparatus in the foregoing embodiments. The configuration apparatus and the scheduling apparatus included in the computing system may be separately disposed, or may be integrated together. When the configuration apparatus and the scheduling apparatus are integrated together, the computing system may be the server in the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (random access memory, RAM), a flash memory, an erasable programmable read-only memory (erasable programmable ROM, EPROM), an electrically erasable programmable read-only memory (electrically EPROM, EEPROM), a register, a hard disk drive, a removable hard disk drive, a compact disc read-only memory (CD-ROM), or any other form of storage medium well-known in the art. For example, the storage medium is coupled to the processor, so that the processor can read information from the storage medium and write information into the storage medium. Certainly, the storage medium may alternatively be a component of the processor.

A person skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in the computer-readable medium. The computer-readable medium includes a computer storage medium and a communication medium. The communication medium includes any medium that enables a computer program to be transmitted from one place to another. The storage medium may be any available medium that can be accessed by a general-purpose or a dedicated computer.

Objectives, technical solutions, and beneficial effects of the present invention are further described in detail in the foregoing specific implementations. It should be understood that the foregoing descriptions are merely specific implementations of the present invention, and are not intended to limit the protection scope of the present invention. Any modification, equivalent replacement, improvement, or the like made based on the technical solutions of the present invention shall fall within the protection scope of the present invention.

## Claims

1. A configuration apparatus, wherein the configuration apparatus comprises a processor and a transmission interface, wherein
the processor is configured to:
configure at least one virtual function VF;
configure a resource pool corresponding to each VF and running time information of each VF, wherein the resource pool comprises at least one hardware computing unit; and
send configuration information through the transmission interface, wherein the configuration information indicates a resource pool corresponding to the at least one VF and running time information of the at least one VF.

2. The configuration apparatus according to claim 1, wherein the at least one hardware computing unit is obtained through physical division on an acceleration apparatus.

3. The configuration apparatus according to claim 2, wherein the acceleration apparatus comprises at least one of an artificial intelligence AI processor, a graphics processing unit GPU, a central processing unit CPU, a joint photographic experts group encoder JPEGE, or a joint photographic experts group decoder JPEGD.

4. The configuration apparatus according to any one of claims 1 to 3, wherein the at least one hardware computing unit comprises at least one of an artificial intelligence computing core AIC, a GPU core, a CPU core, a JPEGE processing unit, or a JPEGD processing unit.

5. The configuration apparatus according to any one of claims 1 to 4, wherein the configuration information further indicates a correspondence between the resource pool and the hardware computing unit.

6. The configuration apparatus according to any one of claims 1 to 5, wherein when one resource pool corresponds to one VF, the VF independently occupies a hardware computing unit in the resource pool corresponding to the VF; or when one resource pool corresponds to a plurality of VFs, the plurality of VFs occupy a hardware computing unit in the resource pool in a time-sliced manner based on running time information of each VF.

7. The configuration apparatus according to any one of claims 1 to 6, wherein the processor is specifically configured to configure, based on user request information, the resource pool corresponding to each VF and the running time information of each VF, wherein the user request information comprises at least one of a type of the hardware computing unit, a quantity of hardware computing units, a quantity of users, or a resource scheduling manner.

8. The configuration apparatus according to any one of claims 1 to 6, wherein the processor is further specifically configured to configure, based on resource usage information, the resource pool corresponding to each VF and the running time information of each VF, wherein the resource usage information comprises at least one of a quantity of VFs or usage of the hardware computing unit in the resource pool.

9. A scheduling apparatus, wherein the scheduling apparatus comprises a processor and a transmission interface, wherein
the processor is configured to:
receive configuration information from a configuration apparatus through the transmission interface, wherein the configuration information indicates a resource pool corresponding to a virtual function VF and running time information of the VF, and the resource pool comprises at least one hardware computing unit; and
schedule, based on the configuration information, the hardware computing unit in the resource pool corresponding to the VF, to implement a function of the VF.

10. The scheduling apparatus according to claim 9, wherein the at least one hardware computing unit is obtained through physical division on an acceleration apparatus.

11. The scheduling apparatus according to claim 10, wherein the acceleration apparatus comprises at least one of an artificial intelligence AI processor, a graphics processing unit GPU, a central processing unit CPU, a joint photographic experts group encoder JPEGE, or a joint photographic experts group decoder JPEGD.

12. The scheduling apparatus according to any one of claims 9 to 11, wherein the at least one hardware computing unit comprises at least one of an artificial intelligence computing core AIC, a GPU core, a CPU core, a JPEGE processing unit, or a JPEGD processing unit.

13. The scheduling apparatus according to any one of claims 9 to 12, wherein the processor is further configured to make a route identifier of the VF correspond to a route identifier of the resource pool.

14. The scheduling apparatus according to any one of claims 9 to 13, wherein the configuration information further indicates a correspondence between the resource pool and the hardware computing unit.

15. The scheduling apparatus according to claim 14, wherein the processor is further configured to make the route identifier of the resource pool correspond to a route identifier of the hardware computing unit.

16. The scheduling apparatus according to any one of claims 9 to 15, wherein the scheduling apparatus further comprises a cache, and the cache is configured to store running time information corresponding to each of at least one VF.

17. The scheduling apparatus according to any one of claims 9 to 16, wherein when one resource pool corresponds to one VF, the VF independently occupies a hardware computing unit in the resource pool corresponding to the VF; or when one resource pool corresponds to a plurality of VFs, the plurality of VFs occupy a hardware computing unit in the resource pool in a time-sliced manner based on running time information of each VF.

18. The scheduling apparatus according to any one of claims 9 to 17, wherein at least one virtual machine runs on a server, and the at least one virtual machine comprises a first virtual machine; and
the processor is specifically configured to: receive a first task of the first virtual machine through the transmission interface, determine a first VF corresponding to the first task, and schedule, based on the configuration information, a hardware computing unit in a first resource pool corresponding to the first VF, to implement a function of the first VF.

19. The scheduling apparatus according to claim 18, wherein the first resource pool corresponds to a plurality of VFs, and the plurality of VFs comprise the first VF and a second VF; and
the processor is further specifically configured to: based on running time information of the first VF and running time information of the second VF, send a task of the first VF to the first resource pool through the transmission interface within a running time period of the first VF, and send a task of the second VF to the first resource pool through the transmission interface within a running time period of the second VF.

20. The scheduling apparatus according to claim 19, wherein the processor is further specifically configured to: before the running time period of the first VF ends, if the first VF currently has no task, send the task of the second VF to the first resource pool through the transmission interface.

21. The scheduling apparatus according to claim 20, wherein the processor is further configured to correspondingly increase time of the running time period of the first VF when the task of the first VF is scheduled next time.

22. The scheduling apparatus according to claim 21, wherein the processor is further configured to release the time of the running time period of the first VF or return the time of the running time period of the first VF to zero when time obtained by increasing the time of the running time period of the first VF exceeds first preset duration.

23. The scheduling apparatus according to claim 19, wherein the processor is further configured to send a first instruction to the first resource pool through the transmission interface when the running time period of the first VF ends, wherein the first instruction is used to instruct the first resource pool to stop executing the task of the first VF when the task of the first VF is not completely executed and save a context for executing the task of the first VF.

24. The scheduling apparatus according to claim 19, wherein the processor is further configured to send a second instruction to the first resource pool through the transmission interface when the running time period of the first VF ends, wherein the second instruction is used to instruct the first resource pool to continue to execute the task of the first VF when the task of the first VF is not completely executed; and
the processor is further configured to correspondingly reduce time of the running time period of the first VF when the task of the first VF is scheduled next time.

25. The scheduling apparatus according to claim 24, wherein the processor is further configured to send a third instruction to the first resource pool through the transmission interface when execution time of the task of the first VF exceeds duration of the running time period of the first VF and reaches second preset duration and the task of the first VF is still not completely executed, wherein the third instruction is used to instruct the first resource pool to stop executing the task of the first VF.

26. A configuration method, wherein the method comprises:
configuring, by a configuration apparatus, at least one virtual function VF;
configuring, by the configuration apparatus, a resource pool corresponding to each VF and running time information of each VF, wherein the resource pool comprises at least one hardware computing unit; and
sending, by the configuration apparatus, configuration information to a scheduling apparatus, wherein the configuration information indicates a resource pool corresponding to the at least one VF and running time information of the at least one VF.

27. The configuration method according to claim 26, wherein the at least one hardware computing unit is obtained through physical division on an acceleration apparatus.

28. The configuration method according to claim 27, wherein the acceleration apparatus comprises at least one of an artificial intelligence AI processor, a graphics processing unit GPU, a central processing unit CPU, a joint photographic experts group encoder JPEGE, or a joint photographic experts group decoder JPEGD.

29. The configuration method according to any one of claims 26 to 28, wherein the at least one hardware computing unit comprises at least one of an artificial intelligence computing core AIC, a GPU core, a CPU core, a JPEGE processing unit, or a JPEGD processing unit.

30. The configuration method according to any one of claims 26 to 29, wherein the configuration information further indicates a correspondence between the resource pool and the hardware computing unit.

31. The configuration method according to any one of claims 26 to 30, wherein when one resource pool corresponds to one VF, the VF independently occupies a hardware computing unit in the resource pool corresponding to the VF; or when one resource pool corresponds to a plurality of VFs, the plurality of VFs occupy a hardware computing unit in the resource pool in a time-sliced manner based on running time information of each VF.

32. The configuration method according to any one of claims 26 to 31, wherein the configuring, by the configuration apparatus, a resource pool corresponding to each VF and running time information of each VF comprises:
configuring, by the configuration apparatus based on user request information, the resource pool corresponding to each VF and the running time information of each VF, wherein the user request information comprises at least one of a type of the hardware computing unit, a quantity of hardware computing units, a quantity of users, or a resource scheduling manner.

33. The configuration method according to any one of claims 26 to 31, wherein the configuring, by the configuration apparatus, a resource pool corresponding to each VF and running time information of each VF further comprises:
configuring, by the configuration apparatus based on resource usage information, the resource pool corresponding to each VF and the running time information of each VF, wherein the resource usage information comprises at least one of a quantity of VFs or usage of the hardware computing unit in the resource pool.

34. A scheduling method, wherein the method comprises:
receiving, by a scheduling apparatus, configuration information from a configuration apparatus, wherein the configuration information indicates a resource pool corresponding to a virtual function VF and running time information of the VF, and the resource pool comprises at least one hardware computing unit; and
scheduling, by the scheduling apparatus based on the configuration information, the hardware computing unit in the resource pool corresponding to the VF, to implement a function of the VF.

35. The scheduling method according to claim 34, wherein the at least one hardware computing unit is obtained through physical division on an acceleration apparatus.

36. The scheduling method according to claim 35, wherein the acceleration apparatus comprises at least one of an artificial intelligence AI processor, a graphics processing unit GPU, a central processing unit CPU, a joint photographic experts group encoder JPEGE, or a joint photographic experts group decoder JPEGD.

37. The scheduling method according to any one of claims 34 to 36, wherein the at least one hardware computing unit comprises at least one of an artificial intelligence computing core AIC, a GPU core, a CPU core, a JPEGE processing unit, or a JPEGD processing unit.

38. The scheduling method according to any one of claims 34 to 37, wherein the method further comprises:
making, by the scheduling apparatus, a route identifier of the VF correspond to a route identifier of the resource pool.

39. The scheduling method according to any one of claims 34 to 38, wherein the configuration information further indicates a correspondence between the resource pool and the hardware computing unit.

40. The scheduling method according to claim 39, wherein the method further comprises:
making, by the scheduling apparatus, the route identifier of the resource pool correspond to a route identifier of the hardware computing unit.

41. The scheduling method according to any one of claims 34 to 40, wherein the scheduling apparatus comprises a cache, and the cache is configured to store running time information corresponding to each of at least one VF.

42. The scheduling method according to any one of claims 34 to 41, wherein when one resource pool corresponds to one VF, the VF independently occupies a hardware computing unit in the resource pool corresponding to the VF; or when one resource pool corresponds to a plurality of VFs, the plurality of VFs occupy a hardware computing unit in the resource pool in a time-sliced manner based on running time information of each VF.

43. The scheduling method according to any one of claims 34 to 42, wherein at least one virtual machine runs on a server, and the at least one virtual machine comprises a first virtual machine; and the method further comprises:
receiving, by the scheduling apparatus, a first task from the first virtual machine, and determining a first VF corresponding to the first task.

44. The scheduling method according to claim 43, wherein the first resource pool corresponds to a plurality of VFs, and the plurality of VFs comprise the first VF and a second VF; and the scheduling, by the scheduling apparatus based on the configuration information, the hardware computing unit in the resource pool corresponding to the VF, to implement a function of the VF comprises:
based on running time information of the first VF and running time information of the second VF, sending, by the scheduling apparatus, a task of the first VF to the first resource pool within a running time period of the first VF, and sending a task of the second VF to the first resource pool within a running time period of the second VF.

45. The scheduling method according to claim 44, wherein the scheduling, by the scheduling apparatus based on the configuration information, the hardware computing unit in the resource pool corresponding to the VF, to implement a function of the VF further comprises:
before the running time period of the first VF ends, if the first VF currently has no task, sending, by the scheduling apparatus, the task of the second VF to the first resource pool.

46. The scheduling method according to claim 45, wherein the method further comprises:
correspondingly increasing, by the scheduling apparatus, time of the running time period of the first VF when the task of the first VF is scheduled next time.

47. The scheduling method according to claim 46, wherein the method further comprises:
releasing, by the scheduling apparatus, the time of the running time period of the first VF or returning the time of the running time period of the first VF to zero when time obtained by increasing the time of the running time period of the first VF exceeds first preset duration.

48. The scheduling method according to claim 44, wherein the scheduling, by the scheduling apparatus based on the configuration information, the hardware computing unit in the resource pool corresponding to the VF, to implement a function of the VF further comprises:
sending, by the scheduling apparatus, a first instruction to the first resource pool when the running time period of the first VF ends, wherein the first instruction is used to instruct the first resource pool to stop executing the task of the first VF when the task of the first VF is not completely executed and save a context for executing the task of the first VF.

49. The scheduling method according to claim 44, wherein the scheduling, by the scheduling apparatus based on the configuration information, the hardware computing unit in the resource pool corresponding to the VF, to implement a function of the VF further comprises:
sending, by the scheduling apparatus, a second instruction to the first resource pool when the running time period of the first VF ends, wherein the second instruction is used to instruct the first resource pool to continue to execute the task of the first VF when the task of the first VF is not completely executed.

50. The scheduling method according to claim 49, wherein the method further comprises:
correspondingly reducing, by the scheduling apparatus, time of the running time period of the first VF when the task of the first VF is scheduled next time.

51. The scheduling method according to claim 49 or 50, wherein the method further comprises:
sending, by the scheduling apparatus, a third instruction to the first resource pool when execution time of the task of the first VF exceeds duration of the running time period of the first VF and reaches second preset duration and the task of the first VF is still not completely executed, wherein the third instruction is used to instruct the first resource pool to stop executing the task of the first VF.

52. A computer-readable storage medium, wherein the computer-readable storage medium comprises computer program code; and when the computer program code is run on a processor, the processor is enabled to perform the configuration method according to any one of claims 26 to 33, or perform the scheduling method according to any one of claims 34 to 51.

53. A computer program product, wherein the computer program product comprises program instructions; and when the program instructions are executed, the configuration method according to any one of claims 26 to 33 is implemented, or the scheduling method according to any one of claims 34 to 51 is implemented.

54. A computing system, wherein the computing system comprises a configuration apparatus and a scheduling apparatus, wherein
the configuration apparatus is configured to: configure at least one virtual function VF; configure a resource pool corresponding to each VF and running time information of each VF, wherein the resource pool comprises at least one hardware computing unit; and send configuration information to the scheduling apparatus, wherein the configuration information indicates a resource pool corresponding to the at least one VF and running time information of the at least one VF; and
the scheduling apparatus is configured to schedule, based on the configuration information, the hardware computing unit in the resource pool corresponding to the VF, to implement a function of the VF.
